(19) Europäisches Patentamt / European Patent Office / Office européen des brevets

(11) **EP 2 649 838 B1**

(12) **EUROPEAN PATENT SPECIFICATION**

(45) Date of publication and mention
of the grant of the patent:
**22.04.2015 Bulletin 2015/17**

(21) Application number: **11808392.2**

(22) Date of filing: **01.12.2011**

(51) Int Cl.:
***H04W 24/02*** (2009.01)

(86) International application number:
**PCT/SE2011/051467**

(87) International publication number:
**WO 2012/078095 (14.06.2012 Gazette 2012/24)**

(54) **SIGNALLING FOR INTERFERENCE MANAGEMENT IN HETNETS**

SIGNALISIERUNG FÜR INTERFERENZKONTROLLE IN HETNETS

SIGNALISATION POUR LA GESTION DES INTERFÉRENCES DANS DES RÉSEAUX HETNETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2010 US 421754 P**

(43) Date of publication of application:
**16.10.2013 Bulletin 2013/42**

(73) Proprietor: **Telefonaktiebolaget L M Ericsson
(publ)
164 83 Stockholm (SE)**

(72) Inventors:
• **WIGREN, Torbjörn
S-756 53 Uppsala (SE)**
• **SIOMINA, Iana
S-170 66 Solna (SE)**

(74) Representative: **Kühn, Friedrich Heinrich
Ericsson AB
Patent Unit Kista RAN 1
Torshamnsgatan 23
164 80 Stockholm (SE)**

(56) References cited:
**EP-A1- 2 647 143       WO-A1-2008/039123
WO-A1-2008/097145    WO-A1-2012/074475
US-A1- 2009 088 080**

• **AHMED M H: "Call admission control in wireless
networks: a comprehensive survey", IEEE
COMMUNICATIONS SURVEYS, IEEE, NEW
YORK, NY, US, vol. 7, no. 1, 1 January 2005
(2005-01-01) , pages 49-68, XP011290930, ISSN:
1553-877X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates generally to signaling information between network nodes, e.g., between a Radio Base Station (RBS) and a Radio Network Controller (RNC), and more particularly relates to signaling of information about the interference after suppression information to facilitate network management operations, particularly those in heterogeneous networks (HETNETs).

## BACKGROUND

There has been an increased interest in recent years in deploying low-power nodes, e.g., pico, micro, and femto base stations as well as relay nodes, home NodeBs/eNodeBs, relays, remote radio heads, etc., to enhance the macro network performance of the wireless network in terms of the network coverage, capacity, and service experience of individual users. With the increased interest in such deployments has come the realization that there is a need for enhanced interference management techniques to address the arising interference issues caused, for example, by the transmit power variations among different cells. In the past, such interference management techniques have not been necessary because lower-power nodes have generally been used for indoor environments, and therefore, have been isolated from most forms of interference. Thus, conventional radio resource management techniques do not consider information about the interference after suppression, referred to herein as interference suppressed information. For example, indoor environments generally experience good isolation from interference caused by macro-layer transmissions. However, lower-power nodes are now being considered for outdoor environments, and for capacity enhancement in general, where interference management is more critical.

Heterogeneous networks, where low-power nodes of different transmit powers are placed throughout a macro-cell layout to cope with non-uniform traffic distribution, have been subject to standardization in 3GPP. Deployment of such technology is effective for capacity extension in certain areas, e.g., small geographical areas with higher user density and/or higher traffic intensity known as traffic hot spots. Further, heterogeneous deployments may also be used to adopt the wireless network to the traffic needs and the environment. However, the mix of all of these different nodes introduces interaction between the cells in new ways, e.g., reuse-one networks where the inter-cell isolation is poor.

To address this interaction, some types of mobile communication systems, such as Wideband Code Division Multiple Access (WCDMA) systems, may use interference suppression (IS) to achieve better performance in terms of peak data rates, coverage, system throughput, and system capacity. Examples of commonly used interference suppressing receivers include the G-rake+ receiver, the Frequency Domain Equalizer (FDE) receiver, and the Frequency Domain Pre-Equarizer (FDPE) receiver. As future wireless networks become more heterogeneous in terms of wireless devices, deployed radio network nodes, traffic demand, service types, radio access technologies, etc., incorporating such interference suppression with network management operations becomes increasingly important However, the air interface load interaction, e.g., the effects of the interference created in one cell for the surrounding cells, becomes particularly difficult in WCDMA heterogeneous networks equipped with interference suppression receivers. Appendix A provides some details regarding existing technologies in this area.

To illustrate, consider a low power cell with limited coverage intended to serve a traffic hotspot, where the low-power cell is located in the interior and at the boundary of a specific macro cell. In this case, the low-power cell may use an interference suppression receiver, e.g., a G-RAKE+ receiver, to provide sufficient coverage for the hot spot. Surrounding macro cells interfere with the low-power cell, rendering a high level of neighbor cell interference in the low power cell that does not allow coverage of the hotspot, despite the use of an advanced IS receiver. Such interference only increases when transmissions in the low-power cells are at the maximum power level. As a result, the users of the hot spot are connected to the surrounding macro cells, which further increase the neighbor cell interference experienced by the low-power cell.

WO 2008/097145 A1 discloses a method for providing load reference data in a CDMA system comprises measuring of received total wideband power and of received scheduled enhanced uplink power. State variables are selected corresponding to cell power quantities and measurement functions are selected corresponding to the measured received total wideband power and the measured received scheduled enhanced uplink power. A probability distribution for a first power quantity -related to the selected state variables - is estimated. A conditional probability distribution of a noise floor measure is computed based on the estimated probability distribution for the first power quantity. Load reference data is provided based on the computed conditional probability distribution of the noise floor measure. In a preferred embodiment, the first power quantity is a measure of the difference between received total wideband power and received scheduled enhanced uplink power. The load reference data can be used in e.g. enhanced uplink scheduling or admission control.

WO 2012/074475 A1 discloses a method of providing load measurements in an interference suppression capable radio base station node associated with a plurality of users in a heterogeneous wireless communication system. The method comprises applying interference suppression to received signals in the radio base station node, to provide interference suppressed received signals. The method also comprises estimating (S20) neighbor cell interference based on the interference suppressed received signals, and estimating a reference received total wideband power, based on the interference suppressed received signals. The method also comprises determining a first load measure based on the interference suppressed received signals and the estimated reference received total wideband power, and determining a second load measure based on the interference suppressed received signals, the estimated reference received total wideband power and on the estimated neighbor cell interference.

Recent work by the inventors of the present application has provided ways to estimate various types of interference suppressed information, e.g., interference suppressed neighbor cell interference. However, there are currently no provisions for signaling such interference suppressed information between an RBS and an RNC, between two RNCs, etc. Further, there are currently no provisions for radio resource management using such interference suppressed information. Thus, there remains a need for further network management options based on interference suppressed information.

## SUMMARY

The solution disclosed herein addresses these problems by providing a method and apparatus that enable interference suppressed information comprising information about the interference after suppression to be provided to the RNC and/or to surrounding radio network nodes, e.g., Radio Base Stations (RBSs) and/or Location Management Units (LMUs), thereby providing better radio resource management for hot spots and/or allowing the RBSs to better understand their impact on surrounding cells. Generally, a network node in the wireless network signals interference suppressed information, e.g., an interference suppressed load or interference suppressed overload indicator, an interference suppressed neighbor cell interference, and/or an interference suppressed noise floor to a remote node in the wireless network to facilitate radio resource management. Further, a radio network controller in the wireless network may manage the interference suppressed information by generating an interference management instruction based on the interference suppressed information, and sending the interference management instruction to the radio network node to control one or more interference management settings. Exemplary interference management instructions include but are not limited to power setting instructions, admission control instructions, congestion control instructions, scheduling instructions, handover instructions, load balancing instructions, etc.

One exemplary embodiment provides a network node configured to signal interference suppressed information to one or more remote nodes in a wireless network. Accordingly, the network node comprises an information unit and a signaling unit. The interference suppressed information comprises information about the interference after interference suppression. The information unit is configured to process a received signal using an interference suppression receiver to suppress interference in the received signal to determine the interference suppressed. The interference suppressed information comprises an interference suppressed noise floor associated with a radio network node (e.g., an RBS or an LMU) in the wireless network. For example, when the network node comprises a radio base station, the information unit determines the interference suppressed information by suppressing interference from a received signal and determining the interference suppressed information from the interference-suppressed signal. Alternatively, when the network node comprises a radio network controller, the information unit determines the interference suppressed information by requesting and receiving the interference suppressed information from the radio base station. In any event, the signaling unit signals the interference suppressed information to a remote node in the wireless network, e.g., a radio network controller, a radio base station, etc., via an interface communicatively coupling the network node to the remote node. The signaling unit is further configured to signal a capability indication indicating at least one of an ability of the network node to address interference, an ability of the network node to signal the interference suppressed information, and whether interference suppression has been applied to signaled information. The interference suppressed information is obtained from a noise floor estimate before GRAKE+ processing, multiplied by a scale factor, which scale factor comprises G-RAKE+ combining weights.

Another exemplary embodiment provides a method of signaling interference suppressed information comprising information about interference after interference suppression, between network nodes in a wireless network. The method comprises determining the interference suppressed information comprising an interference suppressed noise floor associated with a base station in the wireless network. The method comprises processing a received signal using an interference suppression receiver to suppress interference in the received signal to determine the interference suppressed information. The method further comprises signaling the interference suppressed information to a remote network node in the wireless network via an interface communicatively coupling the network node to the remote network node..

The method further comprises signaling a capability indication indicating at least one of an ability of the network node to address interference, an ability of the network node to signal the interference suppressed information, and whether interference suppression has been applied to signaled information.

The interference suppressed information is obtained from a noise floor estimate before G-RAKE+ processing, multiplied by a scale factor, which scale factor comprises G-RAKE+ combining weights

## BRIEF DESCRIPTION OF THE DRAWINGS

Figure 1 shows a wireless network.

Figure 2 shows an exemplary network node for the wireless network.

Figure 3 shows an exemplary signaling method for the network node of Figure 2.

Figure 4 shows an exemplary interference suppressed information unit for an RBS.

Figure 5 shows an exemplary interference suppressed information unit for an RNC.

Figure 6 shows an exemplary HETNET load management problem in WCDMA.

Figure 7 shows an exemplary UTRAN architecture per 3GPP TS 25.401.

Figure 8 shows an exemplary LIPA architecture for an HNB connected to a Gn-based SGSN per 3GPP TS 23.060.

Figure 9 shows an exemplary GPRS/UMTS architecture per 3GPP TS 23.060.

Figure 10 shows an exemplary block diagram of a baseline RoT estimation algorithm.

Figure 11 shows a block diagram of an exemplary FDPE receiver structure.

Figure 12 shows a block diagram of an exemplary FDE structure.

Figure 13 shows the antenna RoT together with the RoT estimate and gain seen by user 0.

Figure 14 shows the antenna RoT together with the RoT estimate and gain seen by user 1.

Figure 15 shows the antenna RoT together with the RoT estimate and gain seen by user 2.

Figure 16 shows the antenna RoT together with the RoT estimate and gain seen by user 3.

Figure 17 shows an exemplary block diagram of a load estimation algorithm with FDPE.

## DETAILED DESCRIPTION

The methods and apparatus disclosed herein enable interference suppressed information to be provided to the Radio Network Controller (RNC) and/or to surrounding Radio Base Stations (RBSs) and/or Location Management Units (LMUs) to provide better management of traffic hot spot operations and/or to allow the RBSs to better understand their impact on surrounding cells. As used herein, the term "interference suppressed information" refers to information about the interference after interference suppression, such as may be provided by a G-RAKE+, a Frequency-Domain Equalizer (FDE), a Frequency-Domain Pre-Equalizer (FDPE), etc., and includes e.g., an interference suppressed load or interference suppressed overload indicator, an interference suppressed neighbor cell interference, and/or an interference suppressed noise floor. Generally, a network node in the wireless network signals the interference suppressed information to a remote node in the wireless network. When the network node comprises an RNC, the RNC may also manage the RBS/LMU operations by generating an interference management instruction based on the interference suppressed information, and send the interference management instruction to an RBS/LMU to control one or more interference management settings. Exemplary interference management instructions include but are not limited to power setting instructions, admission control instructions, congestion control instructions, scheduling instructions, handover instructions, load balancing instructions, etc.

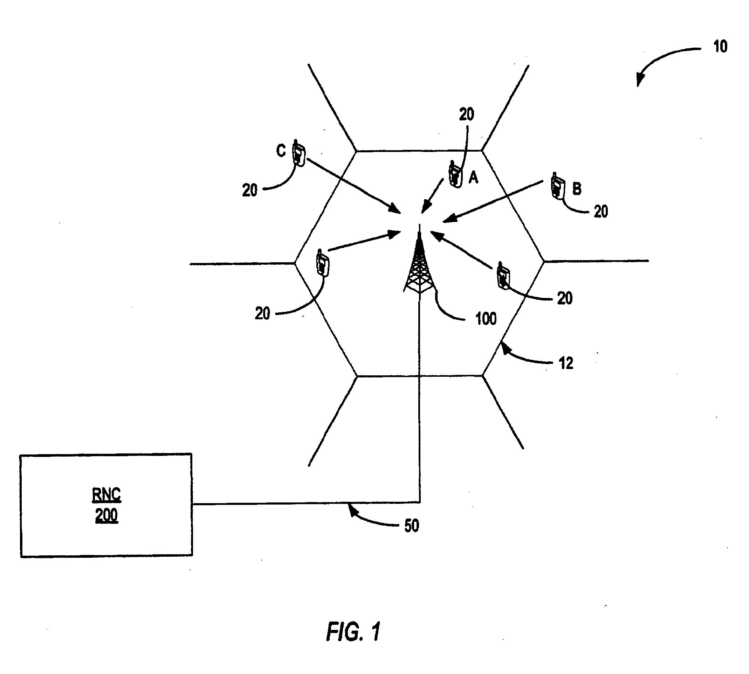

Figure 1 shows an RBS 100 communicatively coupled to an RNC 200 in a mobile communication network 10 via an interface 50, which may comprise a wireless or a wired interface 50. RBS 100 provides service to a plurality of user terminals 20 within a cell 12 served by the RBS 100. The RBS 100 receives signals of interest from the mobile terminals 20 on an uplink (UL) channel, and also receives interfering signals from user terminals 20 in neighboring cells. Thus, for example, mobile terminal "A" would likely experience interfering signals from mobile terminals "B" and "C" which reside in neighboring cells. In WCDMA systems, the RBS 100 controls the transmit power of the mobile terminal 20 over the UL channel so that the received signal power from each mobile terminal 20 is approximately equal. While not explicitly shown in Figure 1, the RBS 100 in Figure 1 may alternatively represent a Location Management Unit (LMU). It will be appreciated that operations herein attributed to the RBS 100 may alternatively be implemented in an LMU.

Exemplary embodiments will be described herein in terms of a Wideband Code Division Multiple Access (WCDMA) Heterogeneous Network (HETNET). Those skilled in the art will appreciate, however, that the method(s) and apparatus(es) disclosed herein are more generally applicable to any wireless communication systems that signal and manage interference suppressed information.

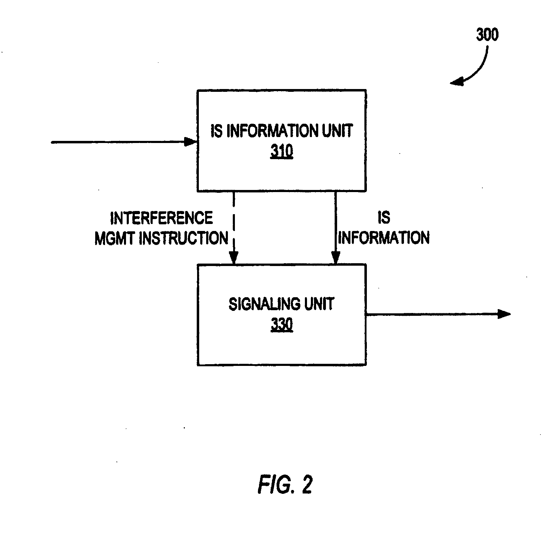

Figure 2 shows an exemplary network node 300, which comprises one of the RBS 100 and the RNC 200. Network node 300 comprises an interference suppression (IS) information unit 310 and a signaling unit 330. Generally, IS information unit 310 determines interference suppressed information comprising at least one of an interference suppressed load or interference suppressed overload indicator, an interference suppressed neighbor cell interference, and an interference suppressed noise floor associated with an RBS 100 in the wireless network. Subsequently, the signaling unit 330 signals the interference suppressed information to a remote node in the wireless network via an interface 50 communicatively coupling the network node 300 to the remote node. For example, the signaling unit 330 may signal the interference suppressed load in terms of an interference suppressed rise-over-thermal, or in terms of an interference suppressed noise rise determined based on the interference suppressed neighbor cell interference. Alternatively or additionally, the signaling unit 330 may signal a total wideband cell power in terms of the interference suppressed noise floor, or may signal the interference suppressed neighbor cell interference.

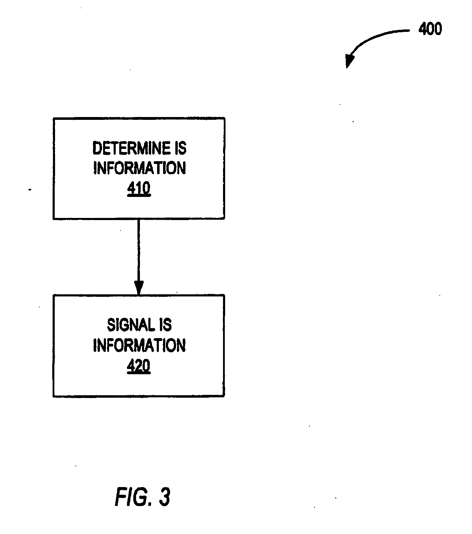

Figure 3 shows an exemplary method 400 for signaling the interference suppressed information between network nodes in a wireless network. The method 400 includes determining interference suppressed information (block 410), where the interference suppressed information includes an interference suppressed load or interference suppressed overload indicator, an interference suppressed neighbor cell interference, and/or an interference suppressed noise floor associated with a base station in the wireless network. For example, the interference suppressed information may be calculated at an RBS 100 or it may be requested and received by an RNC 200. The interference suppressed information is subsequently signaled from the network node 300 that determined the interference suppressed information to a remote network node in the wireless network via an interface (block 420). For example, when RBS 100 determines the interference suppressed information, the RBS 100 may signal the interference suppressed information to an RNC 200. Alternatively, when the RNC 200 determines the interference suppressed information, the RNC 200 may signal the interference suppressed information to an RBS 100 or another RNC 200. Appendix B provides a non-limiting list of examples of signaling operations.

While not required, the signaled information may be signaled for a subset of time and/or frequency domain resources, e.g., a subset of transmission time intervals (TTIs) and/or a subset of frequency sub-arriers. The subset of TTIs may be organized by, for example, node layers. For example, pico nodes may transmit in the first subset of TTIs and macro nodes may transmit in a second subset of TTIs, where the two subsets of TTIs may or may not overlap in time. In this case, an indicator, e.g., a carrier, a pattern reference/index, an indication of using specially designed as low-interference subframes, etc., may be transmitted together with the signaled interference suppressed information to indicate that the signaled information corresponds to a subset of resources. It will further be appreciated that different interference suppressed information may be obtained for and signaled for different TTIs.

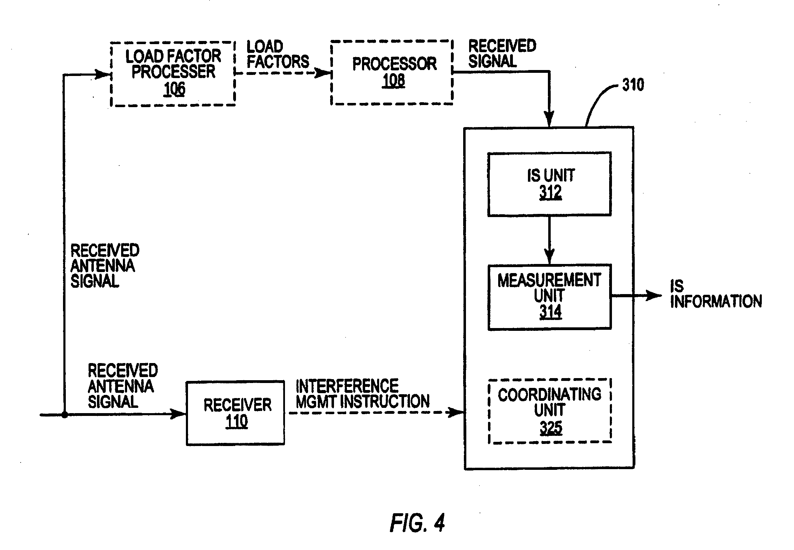

In one exemplary embodiment, the network node 300 comprises an RBS 100, and the remote network node comprises a network controlling node, e.g., RNC 200, an Operation and Maintenance (O&M) node, or a Self-Organizing Network (SON) node. Accordingly, Figure 4 shows an exemplary IS information unit 310 for an RBS network node 300. In this embodiment, IS information unit 310 comprises an interference suppression unit 312 and a measurement unit 314. A receiver 110 in the RBS 100 processes an input signal provided by an antenna (not shown) to generate a received signal input to the IS unit 312. IS unit 312 suppresses interference from the received signal to determine an interference suppressed signal. Exemplary IS units 312 include, but are not limited to, G-RAKE+ units, frequency domain equalization units, and frequency domain pre-equalization units. Measurement unit 314 processes the interference suppressed signal to determine the interference suppressed information. For example, measurement unit 314 may determine an interference suppressed rise-over-thermal based on the interference suppressed signal to determine an interference suppressed load. Alternatively, the measurement unit 314 may determine interference-suppressed neighbor cell interference based on the interference suppressed signal to determine the interference suppressed load, and/or may determine an interference suppressed noise rise based on the interference suppressed neighbor cell interference. It will be appreciated that the IS information unit 310 in the RBS 100 may use any method for determining the interference suppressed information, including but not limited to those techniques disclosed in Appendices C-H. In another example, RBS 300 may comprise a multi-standard RBS, and the remote network node may comprise another RBS or a network node, e.g., a SON, O&M, etc. It will further be appreciated that the interference may be measured on a pre-defined time domain and/or frequency domain radio resources, which may be useful when, e.g., radio resources are divided into sets and the interference is different in different sets.

Responsive to the interference suppressed information determined by the IS information unit 310 in the RBS 100, the signaling unit 330 signals the interference suppressed information to the remote network node, e.g., the RNC 200, another RBS 100, etc. For example, to signal the interference suppressed information, the interface between the RBS 100 and the RNC 200, e.g., the lub interface, may be augmented with Information Elements (IEs) used to signal the desired interference suppressed information. For example, the Common Measurement Report message and the Common Measurement Response message may be augmented with IEs. Alternatively or additionally, the desired interference suppressed information values may be encoded relative to the noise power floor given by the Reference Received Total Wideband Power IE in the same message. In this case, the interference suppressed information would be encoded in dBs in the same manner as the existing IE for the Received Total Wideband Power (RTWP). In another embodiment, the desired interference suppressed information values may be encoded as the existing IE Received Scheduled E-DCH Power Shared (RSEPS), which uses a relative coding to RTWP. The encoding could alternatively be made relative to a new Reference Received Total Wideband Power after interference suppressions, provided such an IE is standardized according to the implementation disclosed herein. Alternatively, the interference suppressed information may be transparently signaled between RBSs 100 via a user terminal 20. In still another embodiment, when the RBS 100 comprises a multi-RAT or multi-standard RBS, the interference suppressed information may be signaled from the RBS 100 using single-RAT or specific multi-RAT interfaces, per RAT and per cell.

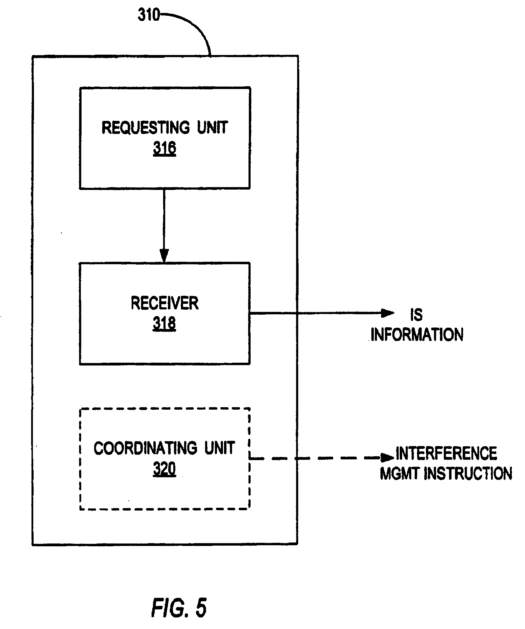

In another exemplary embodiment, the network node 300 comprises an RNC 200, and the remote network node comprises an RBS 100 or a network controlling node, e.g., another RNC 200, O&M node, or a SON node. Accordingly, Figure 5 shows an exemplary IS information unit 310 when the network node 300 comprises the RNC 200. In this embodiment, IS information unit 310 comprises a requesting unit 316 and a receiver 318. The requesting unit 316 sends a request for the interference suppressed information to a RBS 100, while the receiver 318 receives the requested interference suppressed information from the RBS 100. For example, the requesting unit 316 may request the interference suppressed information by sending a Common Measurement Type message that includes a corresponding indicator. The request may indicate that the interference suppressed information should be reported periodically to the RNC 200, or may be event triggered. Further, the request may be specific to each cell 12 or to each RBS 100 in a cell 12.

Responsive to the interference suppressed information determined by the IS information unit 310 in the RNC 200, the signaling unit 330 signals the interference suppressed information to the remote network node, e.g., another RNC 200, the RBS 100 that provided the interference suppressed information, another RBS 100, etc. For example, to signal the interference suppressed information between two controlling nodes, e.g., between two RNCs 200, the Common Measurement Report message and the Common Measurement Response message may be augmented with IEs for signaling any one or more of the interference suppressed information values. To signal the interference suppressed information from the RNC 200 to an RBS 100, the lub interface may be used. In still another embodiment, when the RBS 100 comprises a multi-RAT or multi-standard RBS, the interference suppressed information may be signaled from the RNC 200 to the RBS 100 using single-RAT or specific multi-RAT interfaces, per RAT and per cell.

Network node 300 may also implement management operations directed to controlling various communication parameters, e.g., power control, load threshold control, etc., based on the interference suppressed information. In this case, the network node 300 may additionally comprise a coordinating node, e.g., an RNC 200, an O&M node, a SON, or a coordinating Radio Resource Management (RRM) node, where the IS information unit 310 in the coordinating node includes a coordinating unit 320, as shown in Figure 5, that further processes the received interference suppressed information to generate an interference management instruction. The signaling unit 330 subsequently signals the interference management instruction to an RBS 100 in the network 10, e.g., the RBS 100 that calculated the interference suppressed information and/or another RBS 100. In this case, the RBS 100 may also include a management unit 325 (Figure 4), where the receiver 110 provides the received interference management instruction to the coordinating unit 325, and the coordinating unit 325 executes the received interference management instruction. For example, the coordinating unit 325 may implement power control, admission control, congestion control, scheduling control handover control, and/or load balancing control responsive to the interference management instruction. While not required, the signaled management instruction may be obtained from interference suppressed information determined for a subset of time and/or frequency domain resources, e.g., a subset of transmission time intervals and/or a subset of frequency sub-carriers. When the RBS 100 comprises a multi-RAT or multi-standard RBS, the signaled management instruction may be used by joint functional blocks, e.g., for multi-RAT admission control, scheduling, load balancing, interference management, or power sharing. Appendix I provides a non-limiting list of examples of coordinating operations.

In one exemplary embodiment, the interference suppressed information includes the uplink neighbor cell interference and/or uplink load estimates after interference suppression, where the RBS 100 adjusts the maximum downlink transmit power based on this interference suppressed information. In this example, the downlink power control may be implemented dynamically, and may also be used for power sharing in multi-RAT and/or multi-standard RBSs 100. One advantage of such downlink power control is that such downlink power control can be done autonomously by a radio network node 100, e.g., home NodeB. This advantage is based on the observation that the estimated high uplink interference at a radio network node 100 with small coverage may indicate the presence of a nearby mobile terminal 20 transmitting at a high power when, e.g., being served by a large neighbor cell, e.g., a macro cell. Some decision examples for adjusting the transmit power of the radio network node 100 with small coverage are, e.g., reducing the transmit power of the radio network node 100 with small coverage in order to reduce the interference in the downlink to the nearby mobile terminals 20. Alternatively, if the load of the radio network node 100 with small coverage allows, e.g., is not too high, then in some examples it may be better to increase the coverage of this radio network node 100, e.g., to increase its transmit power, to push away the cell boundary and get the nearby macro cell mobile terminal to reselect and get served to the adjusted radio network node 100, and thus avoid uplink interference at the radio network node 100 and downlink interference at the nearby mobile terminal 20. The power adjusting decision may also depend on whether the radio network node 100 with small coverage uses Closed-Subscriber Groups (CSGs) and whether the mobile terminal 20 belongs to that group.

In another exemplary embodiment, the interference suppressed information may be used to decide a configuration subset of time resources, e.g., the density of blank or low interference time instances. Such resources may be configured, for example, in less loaded cells to temporarily improve interference conditions in a highly loaded or relatively weak (e.g., pico) neighbor cell, or in CSG cells to reduce interference to non-CSG terminals in the corresponding coverage area. The configuration of the time resources may be performed by the RNC 200 or the RBS 100. Further, the configuration of the time resources may be performed by a centralized node, such as the O&M and subsequently distributed to other network nodes.

In still another exemplary embodiment, the interference suppressed information may be used to set an overload indicator, which is subsequently signaled to a network node. The overload indicator may be set based on a comparison between the interference suppressed information and a predefined threshold, and may be signaled between any node, e.g., from the RBS 100 to the RNC 200, from the RNC 200 to a network controlling node, e.g., the O&M, between RBSs 100, etc. The overload indicator may also be transparently transmitted between RBSs 100 via a user terminal 20.

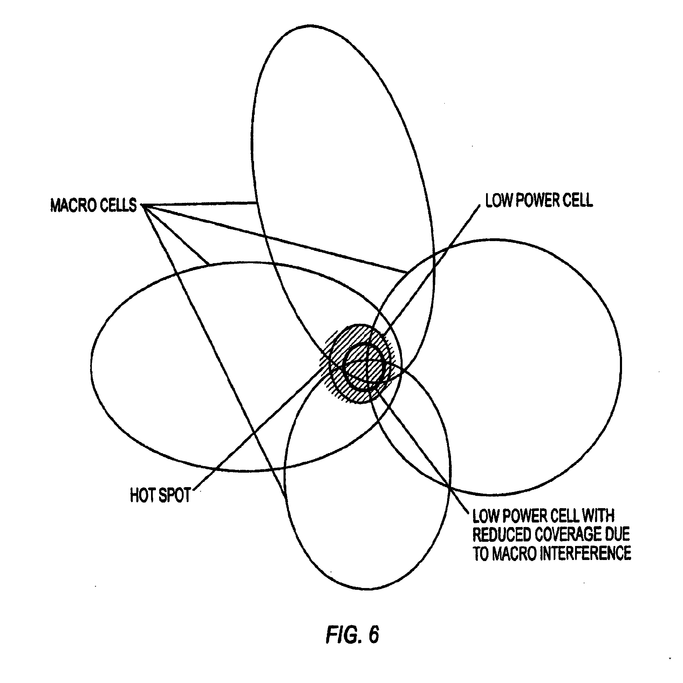

The management operations generally address the previously described load interaction problems, which are shown in Figure 6, which shows the reduced coverage of the center cell as a result of higher or overestimated interference, by executing the following exemplary algorithm, which is intended to be run consecutively in the background for the cells of the system. In one exemplary embodiment, the coordinating unit 320 in the RNC 200 coordinates management of the interference suppressed information by implementing the following:

1. Determine if the received interference suppressed rise-over-thermal is too high (indicating a loss of coverage. If not, proceed to step 5; else proceed to step 2.

2. Determine if the interference suppressed neighbor-cell interference is also too high. If not, proceed to step 2b; else proceed to step 2a.

    a. If the interference suppressed neighbor-cell interference is too high, proceed to step 4.
    b. If the interference suppressed own-cell interference is too high, proceed to step 3.

3. Use an algorithm to change the admission control threshold of the own-cell, to accept fewer user terminals 20 in the own cell (or to allocate another frequency carrier for a multi-RAT or multi-carrier system) and shrink the coverage of this cell, with a first predefined step (in dBs). Proceed to step 5. In one example, the admission threshold may be any of the number of user terminals 20, the worst target service quality or GBR level, the lowest received signal strength, etc.

4. Use an algorithm to change the admission control thresholds of the surrounding cells, to admit fewer user terminals 20 in the surrounding neighbor cells and shrink their coverage areas.

    a. Check the own-cell noise rise level relevant for stability after interference suppression (not the RoT level which is corrupted by neighbor cell interference) of each of the surrounding cells, and select the surrounding cell with the highest value (most likely to cause problems).
    b. Generate a management instruction to reduce the admission control threshold of the surrounding cell with the highest value of the interference suppressed noise rise relevant for stability, with a second predefined step (in dBs) to accept fewer user terminals 20 in that cell 12 (or to allocate another frequency carrier for a multi-RAT or multi-carrier system) and shrink its coverage area.
    c. Mark the cell 12 as one with a reduced admission control threshold.
    d. Proceed to step 5.

5. In case the cell is marked as one with a reduced threshold, determine if the interference suppressed rise-over-thermal is too high. If it is too high, end; else proceed to step 6.

6. Generate a management instruction to increase the admission control threshold with a third predefined step (in dBs), maximally up to the pre-defined admission control threshold.

It will be appreciated that the above algorithm represents a typical non-limiting embodiment. Thus, other alternatives may be used.

Upon receipt of the interference management instruction from the RNC 200 at the RBS 100, the coordinating unit 325 in RBS 100 may execute the received interference management instruction. For example, coordinating unit 325 may:

1. Determine if the interference suppressed noise rise is among the predetermined number with the highest value of the cells signaled from the RNC 200, indicating that this RBS 100 is creating too much neighbor cell interference. If so, proceed to step 2; else proceed to step 3.

2. Reduce the scheduling threshold for the own UL load a first pre-determined step (in dBs). Mark the threshold as reduced. Start a timer during which increases of the threshold are blocked, where the scheduling threshold may be the number of scheduled user terminals 20 over a given period of time.

3. Determine if the scheduling threshold for the own UL load is marked as reduced, and if the interference suppressed noise figure is among the predetermined number with the highest value of the cells signaled from the RNC 200, indicating that this RBS 100 is still creating too much neighbor cell interference. If so, proceed to step 5; else proceed to step 4.

4. Determine if the scheduling threshold for the own UL load is marked as reduced. If the increase of the threshold is blocked, end; else proceed to step 5.

5. Increase the scheduling threshold for the own UL load a second predetermined step (in dBs), maximally up to the pre-defined or default scheduling threshold for the own UL load.

The signaling and/or management operations associated with interference suppressed information as disclosed herein provide previously unavailable information to any network node 300 in the wireless network. The RNC 200, for example, can then perform HETNET load management by the use of novel admission control algorithms. The RNC 200 can also signal the above information, valid for a specific cell ID to all surrounding RBSs, thereby allowing also RBSs to perform HETNET load management by the use of novel algorithms.

The interference suppressed information being signaled between network nodes and/or used for management operations is determined by the RBS 100. It will be appreciated that the RBS node may use any method for determining the interference suppressed information, including those techniques disclosed in Appendices C-H. The following provides one example for providing the interference suppressed information comprising interference suppressed neighbor cell interference estimation, which may, e.g., be implemented in the measurement unit 314.

First, the neighbor cell interference is estimated using the received signal before interference suppression. The idea is to modify a Kalman filter of a front end of a receiver so that the internally estimated state becomes the sum of neighbor cell interference and thermal noise. More particularly, the modified Kalman filter performs a joint estimation of the RTWP power, $P_{RTWP}(t)$, and the sum of the neighbor cell interference power and the thermal noise power floor, $P_{neighbor}(t)+P_N(t)$, before interference suppression. It will be appreciated that the modified Kalman filter may be implemented as part of the IS information unit 310. Alternatively, when receiver 110 comprises an interference suppression receiver, and the received signal output by receiver 110 comprises an interference suppressed received signal the modified Kalman filter may be implemented in a processing unit, e.g., processor 108, preceding the receiver 110 in the signal chain.

The modified Kalman filter performs the joint estimation using measurements of $P_{RTWP}(t)$ determined by the IS information unit 310. with a sampling rate of $T_{RTWP}(t) = k_{RTWP}TTI$ for $k_{RTWP} \in Z +$, where $Z +$ represents a set of positive integers, and using computed own-cell load factors $L_{own}(t)$, with a sampling of $T_L(t) = k_L TTI$ for $k_L \in Z +$. For example, the own-cell load factors may be computed in a load factor processor 106 and input into processor 108. The IS information unit 310 subsequently selects the state as:

$$x_1(t) = P_{neighbor}(t) + P_N(t). \qquad (1)$$

The measured signal available for processing is $P_{RTWP}(t)$, which may be generated by processor 108. The $L_{own}(t)$ is a computed quantity, e.g., based on signal-to-noise ratio measurements. For example, $L_{own}(t)$ may be computed according to:

$$L_{own} = \sum_{u=1}^{U} \frac{P_u}{P_{RTWP}} = \sum_{u=1}^{U} \frac{(C/I)_u}{1+(C/I)_u} \qquad (2)$$

where

$$(C/I)_u(t) = \frac{SINR_u(t)}{W_u} \frac{RxLoss}{G}$$

$$\times \left(1 + \frac{\beta^2_{DPDCH,u}(t) + \beta^2_{EDPCCH,u}(t) + n_{codes,u}(t)\beta^2_{EDPDCH,u}(t) + \beta^2_{HSDPCCH,u}(t)}{\beta^2_{DPCCH}(t)}\right). \qquad (3)$$

Here $W_u$ represents the spreading factor for user $u$, $RxLoss$ represents missed receiver energy, G represents the diversity gain, and the $\beta$'s represent the beta factors of the respective channels (assuming non-active channels have zero beta factors). A measured model of $P_{RTWP}(t)$ may then be generated in terms of the states, computed quantities, and a measurement uncertainty. To that end. Equation (2) is used together with a delay $T_D$ that models the scheduling loop delay of WCDMA to compute $P_{RTWP}(t)$ according to:

$$P_{RTWP}(t) = L_{own}(t - T_D) P_{RTWP}(t) + P_{neighbor}(t) + P_N(t), \tag{4}$$

which results in:

$$P_{RTWP}(t) = \frac{1}{1 - L_{own}(t - T_D)} \left( P_{neighbor}(t) + P_N(t) \right). \tag{5}$$

After the addition of a zero-mean white measurement noise $e_{RTWP}(t)$ and replacement of variables by Equation (1), the following time variable measurement equation results:

$$y_{RTWP}(t) = \frac{x_1(t)}{1 - L_{own}(t - T_D)} + e_{RTWP}(t) \tag{6}$$

$$R_{2.RTWP}(t) = E \left| e_{RTWP}^2(t) \right|. \tag{7}$$

Here, $y_{RTWP}(t) = P_{RTWP}(t)$ and $R_{2.RTWP}(t)$ represents the scalar covariance matrix of $e_{RTWP}(t)$. Note: $L_{own}(t)$ is computed using both enhanced uplink and R99 traffic, and therefore, the delay is valid for both.

To set up the optimal filtering algorithm, it is necessary to generate a model for propagation of the state. This may be solved by postulating the most simple such model, e.g., a random walk as given by Equation (8), which is a standard statistical model often used in Kalman filtering.

$$\mathbf{x}(t + T_{TTI}) \equiv x_1(t + T_{in}) = x_1(t) + w_1(t) \tag{8}$$

$$\mathbf{R}_1(t) = E \left[ w_1(t) \right]^2. \tag{9}$$

Here, $R_1(t)$ represents the covariance matrix of the zero mean white disturbance. The state space model behind the Kalman filter is:

$$\mathbf{x}(t + T) = \mathbf{A}(t)\mathbf{x}(t) + \mathbf{B}(t)\mathbf{u}(t) + \mathbf{w}(t) \tag{10}$$

$$\mathbf{y}(t) = \mathbf{C}(t)\mathbf{x}(t) + \mathbf{e}(t) \tag{11}$$

Here, x(t) represents the state vector, u(t) represents an input vector, $y(t)$ represents an output measurement vector comprising the power measurements performed by the cell, e.g., the total received wideband power RTWP, w(t) represents the so-called systems noise that represents the modeled error, and e(t) represents the measurement error. The matrix A(t) represents the system matrix describing the dynamic modes, the matrix B(t) represents the input gain matrix, and the vector C(t) represents the measurement vector, which may be time varying. Finally, $t$ represents the time and $T$ represents the sampling period.

The general case with a time varying measurement vector is considered here. The Kalman filter is then given by the following matrix and vector iterations after the initialization, where the initialization is given by $t = t_0$, $\hat{x}(0|-1) = x_0$, and $P(0|-1) = P_0$.

$$t = t + T$$

$$\mathbf{K}_f(t) = \mathbf{P}(t|t-T)\mathbf{C}^T(t)\left(\mathbf{C}(t)\mathbf{P}(t|t-T)\mathbf{C}^T(t) + \mathbf{R}_2(t)\right)^{-1}$$
$$\hat{\mathbf{x}}(t|t) = \hat{\mathbf{x}}(t|t-T) + \mathbf{K}_f(t)\left(\mathbf{y}(t) - \mathbf{C}(t)\hat{\mathbf{x}}(t|t-T)\right)$$
$$\mathbf{P}(t|t) = \mathbf{P}(t|t-T) - \mathbf{K}_f(t)\mathbf{C}(t)\mathbf{P}(t|t-T) \qquad (12)$$
$$\hat{\mathbf{x}}(t+T|t) = \mathbf{A}\mathbf{x}(t|t) + \mathbf{B}\mathbf{u}(t)$$
$$\mathbf{P}(t+T|t) = \mathbf{A}\mathbf{P}(t|t)\mathbf{A}^T + \mathbf{R}_1(t)$$

*End*

where $\hat{x}(t|t-T)$ represents the state prediction based on data up to time $t-T$, $\hat{x}(t|t)$ represents the filter update based on data up to time $t$, $P(t|t-T)$ represents the covariance matrix of the state prediction based o data up to time $t-T$. $P(t|t)$ represents the covariance matrix of the filter update based on data up to time t, $C(t)$ represents the measurement matrix, $K_f(t)$ represents the time variable Kalman gain matrix, $R_2(t)$ represents the measurement covariance matrix, and $R_1(t)$ represents the system noise covariance matrix. It will be appreciated that $R_1(t)$ and $R_2(t)$ are often used as tuning variables for the filter. In principle, the bandwidth of the Kalman filter is controlled by the matrix quotient of $R_1(t)$ and $R_2(t)$.

The quantities of the Kalman filter for estimation of the sum of neighbor cell interference and noise power can now be defined. Using the state and measurement equations it follows that:

$$C(t) = \frac{1}{1 - L_{own}(t - T_D)} \qquad (13)$$

$$\mathbf{R}_2(t) = R_{2,RTWP}(t) = E\left[e^2_{RTWP}(t)\right] \qquad (14)$$

$$\mathbf{A} = 1 \qquad (15)$$

$$\mathbf{B} = 0 \qquad (16)$$

$$\mathbf{R}_1(t) = E\left[w_1(t)\right]^2. \qquad (17)$$

The final processing step is provided by the algorithms for noise power floor estimation, which operate on the Gaussian distribution of the state $\hat{x}_1(t)$. Representing the estimated noise floor by $P_N(t)$, it follows that the estimated neighbor cell interference becomes:

$$\hat{I}_{neighbor}(t) = \hat{P}_{neighbor}(t) = \hat{x}(t) - P_N(t). \qquad (18)$$

As explained in Appendix D, and particularly Equation D2, the interference suppressed neighbor cell interference via G-RAKE+ is obtained by scaling Equation (18) according to:

$$\hat{I}^{G+}_{u,neighbor} = w^H w \hat{I}_{neighbor} \qquad (19)$$

In Equation (19), the user dependence shown in Equation D2 has been removed because Equation (18) is obtained for the complete cell. Similar expressions may be obtained for the FDE and FDPE by using the neighbor cell interference before interference suppression in Equations H3 and F3, respectively. The interference suppressed noise floor may be computed in the baseband of the RBS 100 from a scale factor expressing the effect of the interference suppression and the noise floor calculated before interference suppression, e.g., as calculated in Equation (19).

In addition to signaling the interference suppressed information, the signaling unit 330 may also signal a network nodes' capability using a capability indication, where "capability" refers to the network node's ability to deal with various levels of interference and report the interference suppressed information. While not required, the capability indication may also indicate whether interference suppression has been applied to the reported information. In any event, such capability signaling may be especially beneficial in high-interference scenarios or heterogeneous network deployments, where network nodes 300 having different capabilities are deployed in the same area. It will be appreciated that the capability indication may be provided responsive to a request, or may be provided independent of a request, e.g., with a measurement reporting or when an RBS 100 registers with the network 10, and that the capability information may be signaled to any controlling network node 300, e.g., an RNC and/or an O&M. A controlling network node 300 may factor in the capability information with the interference suppressed information when making decisions about future wireless communications in the network 10.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## APPENDIX A: CONVENTIONAL TECHNOLOGY

### UTRAN Architecture

UMTS Terrestrial Radio Access Network (UTRAN) consists of two distinct elements:

- The NodeB, generally referred to herein as an RBS, which converts the data flow between the lub and Uu interfaces and also participates in Radio Resource Management (RRM), in particular by EUL scheduling.
- The Radio Network Controller (RNC), which owns and controls the radio resources in its domain (the NodeBs connected to it). The RNC is the service access point for all services UTRAN provides the Core Network (CN).

At least the following basic interfaces exist in UTRAN:

- Uu Interface, the interface between the UE and NodeB,
- lu Interface, connects UTRAN to the CN,
- lur Interface, the open interface that allows soft handover between RNCs from different manufacturers,
- lub Interface, connects a Node B and an RNC.

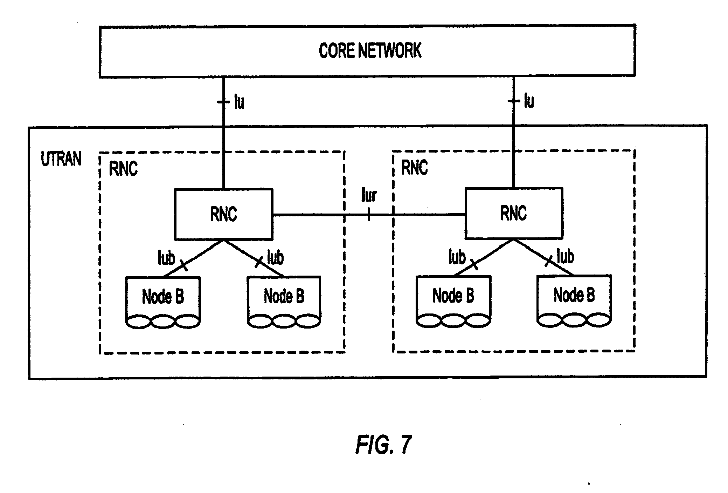

An UMTS architecture for 3GPP is illustrated in Figure 7. UTRAN consists of one or more Radio Network Subsystems (RNS), which are connected to the core network through the lu. An RNS is a sub-network within UTRAN and consists of one Radio Network Controller (RNC) and one or more Node Bs. A Node B can support FDD mode, TDD mode, or dual mode operation. RNCs may be connected to each other via an lur interface. The RNC is responsible for the Handover decisions that require signaling to the UE. RNC is responsible for the control of the radio resources of UTRAN. RNC interfaces with the core network (normally to one MSC and one SGSN).

The RNC controlling a given Node B (e.g., terminating the lub interface towards the Node B) is referred to as Controlling RNC (CRNC). The CRNC is responsible for the load and congestion control of its own cells; it also executes the admission control. One UE connected to UTRAN has one and only one Serving RNC (SRNC) which is responsible for executes basic Radio Resource Management (RRM) operations, such as handover decision, outer loop power control, and the mapping of Radio Access Bearer parameters into air interface transport channel parameters.

Protocols:

- RRC (Radio Resource Control) - defines the messages and procedures between the mobile and UTRAN, terminated in the RNC.
- RAN application part (RANAP) protocol is the protocol between the RNC and the CN.
- Node B Application Part (NBAP) is the protocol over lub interface between NodeB and RNC [3GPP TS 25.433].
- Radio Network Subsystem Application Part (RNSAP) protocol over the lur interface [3GPP TS 25.423] between RNCs.

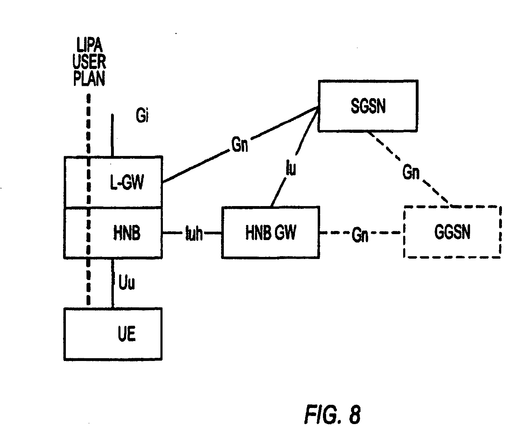

In UMTS networks, there is also a possibility to operate home NodeB (HNB) subsystems. Such subsystems consist of at least an HNB, an HNB GW and optionally a Local GW (see Figure 8). The Local IP Access (LIPA) function [3GPP TS 23.401] enables an IP capable UE connected via a HNB to access other IP capable entities in the same residential/enterprise IP network without the user plane traversing the mobile operator's network except HNB subsystem. The LIPA function is achieved using a Local GW (L-GW) co-located with the HNB. Figure 8 gives just a non-limiting example of a subsystem with low-power nodes (HNBs in this example) that can be deployed in a UMTS network. Other types of nodes, e.g. pico, micro or macro, may also be mixed in an architecture such as illustrated in Figure 7, where these nodes may all be depicted e.g. as NodeBs of different power classes.

**UTRAN measurements and reports**

Some of the standardized UTRAN measurements related to the interference are as **follows** [3GPP TS 25.215, 25.225].

<u>RTWP (Received total wide band power</u>). The received wide band power, including noise generated in the receiver, within the bandwidth defined by the receiver pulse shaping filter. The reference point for the measurement will be the Rx antenna connector. In case of receiver diversity the reported value will be linear average of the power in the diversity branches. When cell portions are defined in the cell, the total received wideband power will be measured for each cell portion.

<u>SIR</u>. Signal to Interference Ratio, is defined as: $(RSCP/ISCP) \times SF$. The measurement will be performed on the DPCCH of a Radio Link Set (Type 1) or on the PRACH control part (Type 2), with the reference point for the SIR measurements will be the Rx antenna connector. Defined for DL only for FDD.

Other measurements, in addition to the standardized ones, may also be performed. In 3GPP, noise floor reporting is specified for FDD. Node B may include the *Reference Received Total Wide Band Power* IE in the message used to report the common measurement when the *Common Measurement Type* IE is set to "Received Total Wide Band Power" and if the *Reference* Received *Total Wide Band Power Reporting* IE is include in the same COMMON MEASUREMENT INITIATION REQUEST message. If the *Reference Received Total Wide Band Power Reporting* IE is included in the COMMON MEASUREMENT INITIATION REQUEST message, the Node B will if supported, include the *Reference Received Total Wide Band* Power *Support Indicator* IE or the Reference *Received Total Wide Band Power* IE in the COMMON MEASUREMENT INITIATION RESPONSE. The Reference Received Total Wide Band Power Support Indicator indicates whether indication of Reference Received Total Wide Band Power is supported by the Node B.

- When reported by the Node B, the Reference Received Total Wide Band Power indicates the reference UL interference (received noise level as an estimate of the noise floor) estimate from the Node B. This value may be used, e.g. for admission or congestion control in the CRNS.
- When sent by the CRNC, the Reference Received Total Wide Band Power indicates the reference UL interference (received noise level) for a certain cell under CRNC. This value may be used for E-DCH scheduling in the Node B.

Received Total Wide Band Power- indicates the UL interference at a certain cell under CRNC. Received Total Wide Band Power may also be included in the Additional E-DCH FDD Information Response IE which provides information for new E-DCH radio links on the secondary UL frequency. Defined for FDD only.

The Load Value IE contains the total load on the measured object relative to the maximum planned load for both the uplink and downlink. It is defined as the load percentage of the Cell Capacity Class.

Received Total Wide Band Power (per cell) can be signaled for FDD

- as apart of the RADIO LINK SETUP RESPONSE, FDD message;
- information for new E-DCH radio links on the secondary UL frequency signaled in the *Additional E-DCH FDD Information Response* IE.

Which measurements are requested to be performed is indicated in the Common Measurement Type, which, among the others, may include the following indicators: load, transmitted carrier power, received total wide band power, UL timeslot ISCP, RT Load (real-time load), NRT Load Information (non-real time load), etc.

**Uplink multi-carrier in enhanced UTRA networks**

The basic idea of the uplink multi-carrier feature (also known as "carrier aggregation") is to achieve better resource utilization and spectrum efficiency by means of joint resource allocation and load balancing across the uplink carriers, which will not be confused with systems that use multiple carrier but without a possibility for joint transmissions over multiple carriers. Multi-carrier UTRA-based systems are also known as MC-HSPA or MC-HSUPA (uplink only). Dual-cell HSUPA is an example of a multi-carrier system. Furthermore, a multi-carrier system may operate over a multiple bands, e.g. dual-band systems.

**Multi-RAT nodes and signaling**

A multi-RAT node may be in general defined as a radio node capable of operating different Radio Access Technologies (RATs). This can be implemented in different ways, e.g. as a one cabinet and same radio but not simultaneously, used for different RATs with each RAT having own baseband modules. Another example is when there is one cabinet with the same radio for different RATs but used simultaneously though still with different RATs having different baseband modules. The latter is referred to as the multi-standard radio (MSR) base stations (BSs) in 3GPP and in this case the RATs if operated simultaneously, time sharing common BS resources, e.g., power.

A MSR BS is a base station characterized by the ability of its receiver and transmitter to process two or more carriers in common, with active RF components simultaneously operated in a declared RF bandwidth, where at least one carrier is of a different RAT than the other carrier(s). MSR BSs may operate in single RAT or multi-RAT modes, and may also have single carrier or multi-carrier transmitter configurations. In 3GPP, radio frequency (RF) requirements for MSR BSs are specified for BSs comprising up to three RATs: E-UTRA, UTRA and GSM/EDGE. When an MSR BS is configured to operate in a single-RAT mode, single-RAT requirements apply in most cases.

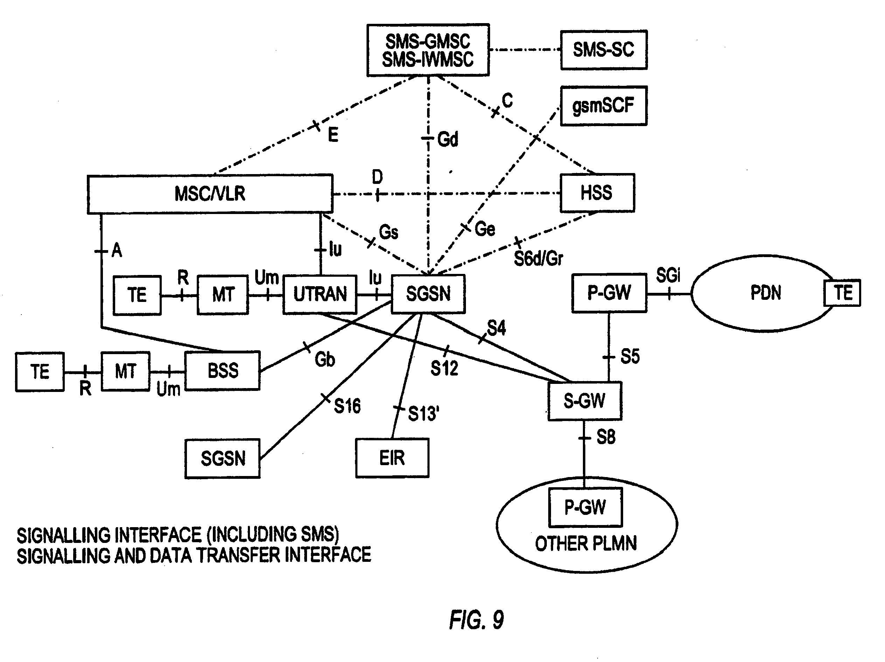

With MSR, the architecture of the network, however, may be the same as for the network with a general mix of different RAT BSs, e.g. as illustrated in Figure 9, although it may be natural to have more common functionalities operating multiple RATs jointly such as scheduling and DL power allocation. Joint functionalities may also imply common nodes for similar functionalities for different RATs, e.g. EVO controller which is a node with a joint BSC (BS controller in GSM) and RNC (radio network controller in RNC) functionalities. One can envision other types of joint nodes, e.g. joint O&M or SGSN nodes, etc. Such nodes, even with joint functionalities still reuse single-RAT interfaces, although may have some proprietary interfaces between the co-located nodes/functional blocks.

**Load in WCDMA without IS**

It is for example shown that without IC/IS, the load at the antenna connector is given by the noise rise, or rise over thermal, *RoT(t),* defined by:

$$RoT(t) = \frac{P_{RTWP}(t)}{P_N(t)}, \qquad (A1)$$

where $P_N(t)$ is the thermal noise level as measured at the antenna connector. It remains to define what is meant with $P_{RTWP}(t)$. As used herein, $P_N(t)$ may also be represented by $\hat{N}(t)$. This relative measure is unaffected of any de-spreading applied. The definition used here is simply the total wideband power:

$$P_{RTWP}(t) = \sum_{k=1}^{K} P_k(t) + I^N(t) + P_N(t), \qquad (A2)$$

also measured at the antenna connector. Here $I^N(t)$ denotes the power as received from neighbor cells $N$ of the WCDMA system. As will be seen below, the major difficulty of any RoT estimation algorithm is to separate the thermal noise power from the interference from neighbor cells.

Another specific problem that needs to be addressed is that the signal reference points are, by definition at the antenna connectors. The measurements are however obtained after the analogue signal conditioning chain, in the digital receiver. The analogue signal conditioning chain does introduce a scale factor error of about 1 dB (1-sigma) that is difficult to compensate for. Fortunately, all powers of (2) are equally affected by the scale factor error so when Equation A1 is calculated, the scale factor error is cancelled as:

$$RoT^{Digital\,Receiver}(t) = \frac{P_{RTWP,Digital\,Receiver}(t)}{P_{N,Digital\,Receiver}(t)} = \frac{\gamma(t)P_{RTWP,Antenna}(t)}{\gamma(t)P_{N,Digital\,Receiver}(t)} = RoT^{Antenna}(t)$$

$$. \qquad (A3)$$

In order to understand the fundamental problem of neighbor cell interference when performing load estimation, note that

$$I^N(t) + P_N(t) = E\left[I^N(t)\right] + E\left[P_N(t)\right] + \Delta I^N(t) + \Delta P_N(t),\qquad\text{(A4)}$$

where $E[\cdot]$ denotes mathematical expectation and where $\Delta$ denotes the variation around the mean. The fundamental problem can now be clearly seen. Since there are no measurements available in the RBS that are related to the neighbor cell interference, a linear filtering operation can at best estimate the sum $E[I^N(t)]+E[P_N(t)]$, cf. "Estimation of Uplink WCDMA load in a Single RBS" by T. Wigren and P. Hellqvist in Proc. IEEE VTC-2007 Fall, Baltimore, MD, Oct. 1-3 2007, referred to herein as the Wigren Single RBS publication. This estimate cannot be used to deduce the value of $E[P_N(t)]$. The situation is the same as when the sum of two numbers is available. Then there is no way to figure out the values of the individual numbers. This issue is analyzed rigorously for the RoT estimation problem in "Soft Uplink Load Estimation in WCDMA" by T. Wigren in IEEE Trans. Veh. Tech., March 2009, referred to herein as the Wigren Soft Uplink publication, where it is proved that the noise power floor is not mathematically observable.

## RoT estimation algorithms without IS

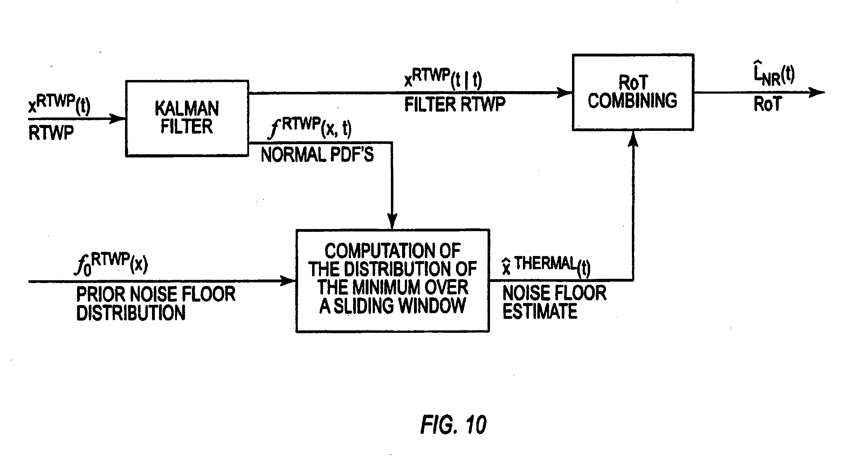

The RoT estimation algorithm currently in use is depicted in Figure 10. It is described in detail in the Wigren Single RBS publication. The algorithm estimates the RoT, as given by Equation A1. The main problem solved by the estimation algorithm is the accurate estimation of the thermal noise floor $P_N(t)$. Since it is not possible to obtain exact estimates of this quantity due to the neighbor cell interference, the estimator therefore applies an approximation, by consideration of the soft minimum as computed over a relative long window in time.

It is important to understand that this estimation relies on the fact that the noise floor is constant over very long periods of time (disregarding the small temperature drift).

The sliding window algorithm of the above section has the disadvantage of requiring a large amount of storage memory. This becomes particularly troublesome in case a large number of instances of the algorithm is needed, as may be the case when interference suppression is introduced in the uplink.

To reduce the memory consumption a recursive algorithm has been disclosed in U.S. Patent Application Serial No. 12/442901, which also corresponds to PCT Application Serial No. WO2008/039123. That algorithm "Recursive Noise Floor Estimation in WCDMA" by T. Wigren in IEEE Trans. Veh. Tech. vol. 59, no. 5, pp. 2615-2620, 2010 (referred to herein as the Wigren Recursive publication) reduces the memory requirements of the sliding window scheme discussed above at least by a factor of 100.

The invention disclosed here is applicable both to the sliding window RoT estimation algorithm and the recursive algorithm.

## Cell stability oriented load estimation algorithms in WCDMA

The cell stability load estimation functionality, e.g. available in the Ericsson product, exploits load factors for each user. In their simplest form the load factors are given by:

$$L_u = \frac{P_u}{P_{RTWP}} = \frac{(C/I)_u}{1+(C/I)_u}, \ u = 1,...,U, \qquad\text{(A5)}$$

where $P_u$ is the power of user. Load factors are then summed up, for each power controlled user. In this way the neighbor cell interference is not included in the resulting load measure. This is reasonable since the neighbor cell interference should not affect the own cell power control loop, at least not when first order effects are considered.

## IS with G-RAKE+ and chip equalizers

One difference with the interference suppressing G-RAKE+ receiver as compared to conventional RAKE, is that each user sees a reduced level of interference, immediately after the weight combining step. In G-RAKE+, a covariance matrix $\hat{R}_u, u = 1,...,U$, with the order equal to the number of fingers is first estimated to capture the interference. The spreading codes not used by the present user $u$ may be used in order to estimate $\hat{R}_u$.

The G-RAKE+ receiver uses the estimated covariance matrix that models the interference for computation of the combining weights for the users $u$, $u = 1,...,U$ according to:

$$\hat{\mathbf{R}}_u \hat{\mathbf{w}}_u = \hat{\mathbf{h}}_u, \quad u = 1,...,U \qquad (A6)$$

where $\hat{h}_u$, $u = 1,...,U$ is the net channel response of user u and where $\hat{w}_u$ are the combining weights. The effect of Equation A6 is that G-RAKE+ essentially whitens the correlated interference and removes large spectral peaks from interferers at certain finger locations and for certain antenna elements.

Note that G-RAKE+ is still a linear receiver. There is a related type of IS receiver for WCDMA which is also linear, denoted the chip equalizer. The difference between G-RAKE+ and the chip equalizer is the order of certain basic operations. The consequence is that the present invention is most likely applicable to the chip equalizer as well.

**Frequency domain pre equalization (FDPE)**

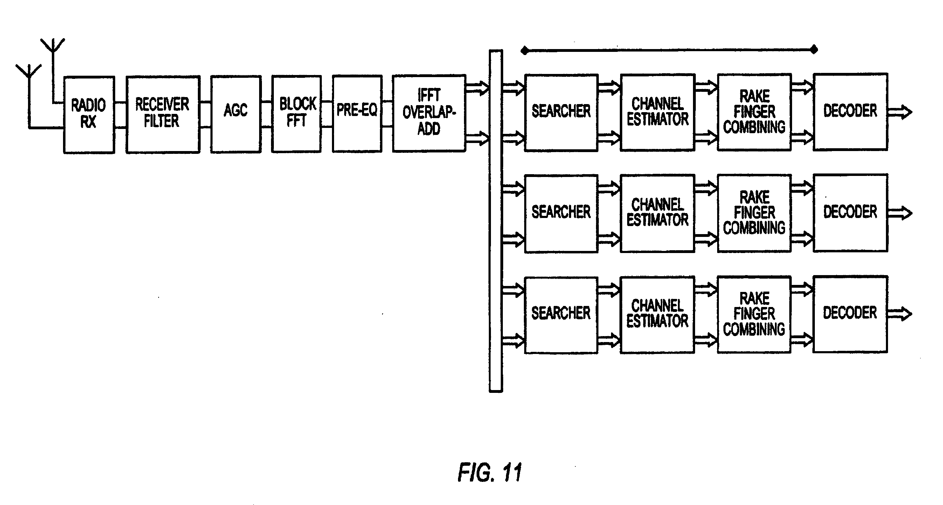

The **FDPE** receiver structure is depicted in Figure 11. The green blocks are added to the existing uplink WCDMA receiver structure without IS. The main advantages associated with this structure are claimed to be

- The FDPE structure gives significant IS gains. It is not dear today if the gains are as large as those achieved with the G-RAKE+ structure.
- The FDPE structure achieves IS for all users simultaneously, thereby reducing the computational complexity as compared to the G-RAKE+ structure that performs processing individually for all users.
- Processing blocks are inserted in the uplink receiver structure that is already in place - thereby reducing development costs.
- The fast Fourier transform (FFT) accelerator hardware developed for LTE can be reused, thereby creating further synergies for the new DUS HW of the RBS.

The FDPE algorithm performs interference whitening in the frequency domain. To explain this in detail, the following time domain signal model can be used:

$$v(t) = \sum_{l=0}^{L-1} h(l) z(t-l) + \eta_v(t). \qquad (A7)$$

Here $v$ is the received (vector due to multiple antennas) signal, with chip sampling rate, $h$ is the radio channel net response, $z$ is the desired (transmitted) signal and $\eta_v$ denotes thermal noise and interference. $t$ denotes discrete time.

Taking the Fourier transform, translates (7) into

$$V(m) = H(m)Z(m) + \mathrm{N}(m), \qquad (A8)$$

where the quantities are the discrete Fourier transform of the corresponding quantities in Equation A7. Now a whitening filter can be applied in the frequency domain. It is well known that the filter that minimizes the mean square error (the MMSE solution) is given by:

$$W_{MMSE}(m) = \left(\hat{R}_d(m)\right)^{-1} \hat{H}(m) = \left(\begin{bmatrix} R_{0,0}(m) & R_{0,1}(m) & L & R_{0,N_r-1}(m) \\ R_{1,0}(m) & R_{1,1}(m) & & \\ M & & O & \\ R_{N_r-1,0}(m) & & & R_{N_r-1,N_r-1}(m) \end{bmatrix}\right)^{-1} \begin{bmatrix} \hat{H}_0(m) \\ \hat{H}_1(m) \\ \\ \hat{H}_{N_r-1}(m) \end{bmatrix}$$

$$(A9)$$

where $\hat{R}_d(m)$ is an estimate of the covariance matrix of $V(m)$. Note: This estimate can e.g. obtained as an average over N different data blocks according to $\hat{R}_d(m) = \dfrac{1}{N} \sum_{k=0}^{N-1} V_k(m) V_k^H(m)$. Using a Cholesky decomposition the covariance matrix between the antenna elements can be factored as:

$$L(m) \cdot L^H(m) = \hat{R}_d(m) \tag{A10}$$

The idea behind FDPE is to exploit this factorization and write:

$$W_{MMSE}(m) = \left(L^H(m)\right)^{-1}\left((L(m))^{-1}\hat{H}(m)\right) = W_{pre}(m)\left((L(m))^{-1}\hat{H}(m)\right) \tag{A11}$$

so that the desired signal in the frequency domain becomes MMSE pre-equalized in the frequency domain, e.g., given by:

$$Z_{pre}(m) = W_{pre}(m)V(m). \tag{A12}$$

This is a user independent processing, which is the same for all users. Hence the wideband received signal is transformed to the frequency domain and the covariance matrix is computed and Cholesky factored, after which Equation A12 is computed. The signal is then transformed back to the time domain where it is further processed for each user. Note that the channels experienced by the RAKE receivers in this processing are obtained from the second factor of Equation A10. The FFT and IFFT blocks have low computational complexity and are preferably implemented in HW.

**Frequency domain equalization (FDE)**

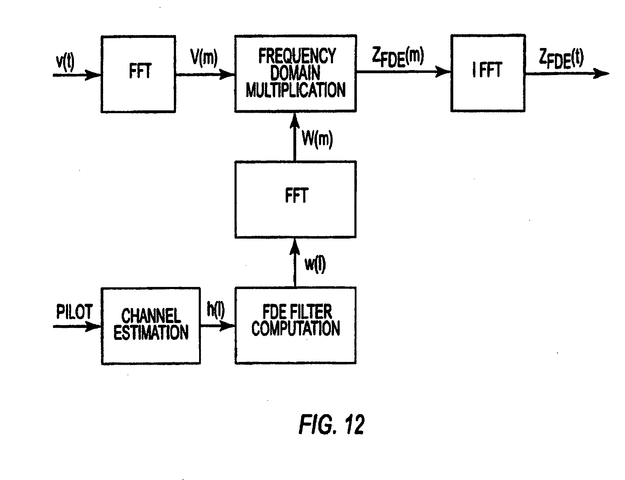

The present description is derived from a presentation of the FDE algorithm in "3G Evolution - HSPA and LTE for Mobile Broadband - Section 5.1" by E. Dahlman, S. Parkvall, JSköld, and P. Beming in 2nd Edition, Academic Press, 2008, referred to herein as the Dahlman reference. The FDE receiver structure is depicted in Figure 12.

The FDE algorithm performs equalization and interference suppression in the frequency domain. To explain this in detail, the following time domain signal model can be used:

$$v_u(t) = \sum_{l=0}^{L-1} h_u(l)z(t-l) + i(t) + n^{thermal}(t), \quad u = 1,...,U. \tag{A13}$$

Here $u$ denotes the user, $v_u$ is the received (vector due to multiple antennas) signal, $h_u$ is the radio channel net response, z is the desired (transmitted) signal, $i(t)$ is the interference, $n^{thermal}(t)$ denotes thermal noise, and t denotes discrete time. Taking the Fourier transform, translates Equation A13 into:

$$V_u(m) = H_u(m)Z_u(m) + I(m) + N^{thermal}(m), \quad u = 1,...,U, \tag{A14}$$

where the quantities are the discrete Fourier transform of the corresponding quantities in Equation A13. Now MMSE equalization can be performed on $V_u(m)$. For this purpose, the channel is estimated using the plot signal. Figure 12 then indicates a first basic method to compute the MMSE filter for the FDE, using time domain calculations as described in the Dahlman reference. However, rather than computing the filter coefficients in the time domain and then transforming to the frequency domain as in Figure 12, the MMSE filter coefficients can be directly computed as the Dahlman reference:

$$W_u(m) = H_u^H(m)\left(H_u(m)H_u^H(m) + I(m)I^H(m) + \left(N^{thermal}(m)\right)^H N^{thermal}(m)\right)^{-1}, \quad u = 1,...,U \tag{A15}$$

where the thermal noise power floor matrix estimate, can be obtained by any of the algorithms of the Wigren Single RBS publication, the Wigren Soft Uplink publication, or the Wigren Recursive publication, and where $H_u(m)$ is the sampled channel frequency response vector. The use of Equation 15 is much less computationally complex than the method depicted in Figure 10 and Equation A15 therefore represents the preferred embodiment for implementation of the FDE. Finally, the equalized signal is computed by a frequency domain multiplication as

$$Z_{FDE,u}(m) = W_u(m)Y_u(m), \qquad u = 1,...,U, \qquad \text{(A16)}$$

after which the inverse FFT is applied to get the signal $z_{FDE,x}(t)$. After this step processing proceeds as in a conventional WCDMA system.

UL HETNET load **management**

Heterogeneous networks concerns effects associated with networks where different kinds of cells are mixed. A problem is then that these cells may have different radio properties in terms of e.g.,

- Radio sensitivity,
- Frequency band,
- Coverage,
- Output power,
- Capacity, and
- Acceptable load level.

This can be an effect of the use of different RBS power classes (macro, micro, pico, femto), different antenna systems (number of antennas, RRHs, etc.), different revision (different receiver technology, SW quality), different vendors and of the purpose of a specific deployment.

One of the most important factors in HETNETs is that of air interface load management, e.g., the issues associated with the scheduling of radio resources in different cells and the interaction between cells in terms of inter-cell interference. The aspects that are of interest for the invention disclosed herein are associated with such air-interface load management in the UL of the WCDMA system. The reason for this renewed interest include

- The need to optimize performance in HETNETs.
- The fact that the concept of load changes with the introduction of the G-RAKE+ in the W12A project.

To exemplify these problems, consider Figure 11. That figure shows a low power cell with limited coverage intended to serve a hotspot. In order to get a sufficient coverage of the hot spot an interference suppressing receiver like the G-RAKE+ is used. The problem is now that the low power cell is located in the interior of and at the boundary of a specific macro cell. Further, surrounding macro cells interfere with the low power cell rendering a high level of neighbor cell interference in the low power cell, that despite the advanced receiver reduces the coverage to levels that do not allow coverage of the hot spot. As a result users of the hot spot are connected to the surrounding macro cells, thereby further increasing the neighbor cell interference experienced by the low power cell.

From this discussion it should be dear that it would be advantageous if the RNC or the surrounding RBSs could be informed of the interference situation and take action, using e.g. admission control in the RNC or new functionality in the surrounding RBSs to reduce neighbor cell interference and to provide a better management of the hot spot traffic - in terms of air interface load.

Note: The interference of low power RBS on macro cells constitute a far less significant problem because of the fact that a low power RBS transmits with low power.

**APPENDIX B: SIGNALING OPTIONS**

1. Signaling between the RBS and the RNC for signaling of the estimated neighbor cell interference after interference suppression, based on the G-RAKE+, FDE, or FDPE.

2. Signaling means between the RBS and the RNC for signaling of the noise floor estimated after interference suppression, based on the G-RAKE+, FDE, or FDPE.

3. Signaling between the RBS and the RNC for signaling the load in terms of i) the rise over thermal after interference suppression processing with the GRAKE+, the FDE or the FDPE , ii) the noise rise relevant for stability after IS processing with the G-RAKE+, FDE or FDPE, said noise rise being based on the neighbor cell interference, after interference suppression processing.

4. Signaling between RNCs for signaling of the measured Reference Received Total Wideband Power of a cell, e.g., the noise floor, obtained after interference suppression, based on the G-RAKE+, FDE, or FDPE.

5. Signaling between RNCs for signaling of the estimated neighbor cell interference after interference suppression, based on the G-RAKE+, FDE, or FDPE.

6. Signaling between RNCs for signaling the load in terms of i) the rise over thermal after interference suppression processing with the G- RAKE+, the FDE or the FDPE, ii) the noise rise relevant for stability after interference suppression processing with the G-RAKE+, FDE or FDPE, said noise rise being based on the neighbor cell interference, after interference suppression processing.

7. Signaling between the RBS and a network controlling node (e.g. O&M or SON nodes) for signaling of the estimated neighbor cell interference after interference suppression, based on the G-RAKE+, FDE, or FDPE.

8. Signaling between the RBS and the network controlling node for signaling the load in terms of i) the rise over thermal after IS processing with the G-RAKE+, the FDE or the FDPE, ii) the noise rise relevant for stability after interference suppression processing with the G-RAKE+, FDE or FDPE, said noise rise being based on the neighbor cell interference, after interference suppression processing.

9. Signaling between the RBS and a network controlling node (e.g., O&M or SON nodes) for signaling the noise floor after interference suppression processing.

10. Signaling for signaling of at least one of i) neighbor cell interference, ii) the rise over thermal after interference suppression processing with the G-RAKE+, the FDE or the FDPE, iii) the noise rise relevant for stability after interference suppression processing with the G-RAKE+, FDE or FDPE, said noise rise being based on the neighbor cell interference, after interference suppression processing, iv) Reference Received Total Wideband Power of a cell, e.g., the noise floor, obtained after interference suppression, based on the G-RAKE+, FDE, or FDPE, said signaling being valid for a certain cell, and being performed from the RNC to RBSs of the cells surrounding this cell over Iub, where the RNC (or a controlling node in general) may or may not be the same.

11. Signaling indicating radio node's capability reflecting the ability of the node to report enhanced interference and load estimates as described above, which can be especially beneficial, e.g., in high-interference scenarios or heterogeneous network deployments with nodes of different capabilities deployed in the same area, where the said indication may be provided with or without request, e.g. in connection to a measurement reporting or when the RBS (e.g. a new femto RBS) registers to the network. Alternatively, the signaling which carries the measurement or estimate may include an indication of whether a processing such as IS processing has been applied prior reporting. The signaled capability may also be the ability of the node to deal with high interference, which may indirectly imply that the reported measurement or estimate is obtained after applying an interference mitigation technique such as interference suppression or interference cancellation.

12. Signaling the neighbor cell interference, the noise floor, or a load measure obtained after interference suppression processing transparently via a UE to another radio node.

**APPENDIX C: INTERFERENCE SUPPRESSED RoT via G-RAKE+**

**Measurement of load after IS in G-RAKE+ and chip equalizers**

To see how load can be estimated taking account of the G-RAKE+ IS gain, the powers after weight combining are studied at sufficient statistics level. As used herein $P_N = \hat{N}$. First, it is assumed that the received signal of user $u$ on code $k \in \Omega_u$ is:

$$\mathbf{y}_{u,k} = \mathbf{h}_u s_{u,k} + \mathbf{I}_{u,k} + \mathbf{N}_{u,k}, \quad u = 1,...,U, \quad k = 1,...,K, \qquad \text{(C1)}$$

where $\Omega_u$ denotes the set of codes for user u, $s_{u,k}$, $u = 1,...,U$, $k = 1,...,K$, is the signal, $I_{u,k}$, $u = 1,...,U$, $k = 1,...,K$, is the interference and $N_{u,k}$, $u = 1,...,U$, $k = 1,...,K$, is the (thermal) noise *signal* (not power) and $\hat{h}_u$, $u = 1,...,U$, is the net channel response of user u. G-RAKE+ then performs weight combining to get the sufficient statistics $z_{u,k}^{G+}$ according to the equations:

$$\hat{z}_{u,k}^{G+} = \hat{\mathbf{w}}_u^H \mathbf{y}_{u,k} = \hat{\mathbf{w}}_u^H \hat{\mathbf{h}}_u s_{u,k} + \hat{\mathbf{w}}_u^H \mathbf{I}_{u,k} + \hat{\mathbf{w}}_u^H \mathbf{N}_{u,k}, \quad u = 1,...,U, \quad k = 1,...,K \qquad \text{(C2)}$$

$$\hat{\mathbf{R}}_u \hat{\mathbf{w}}_u = \hat{\mathbf{h}}_u, \qquad u = 1,...,U \qquad \text{(C3)}$$

Here $\hat{w}_u$ are the combining weights of G-RAKE+, whereas the estimated covariance matrix that models the interference for computation of the combining weights for the users $u$ is given by $\hat{R}_u$. Equations C2 and C3 have two main implications; one indicating how power measurements can be done and one indicating the scale factor problem which is addressed below.

Using Equation C2 it can be seen that the effect of the G-RAKE+ weight combining is the same as if an artificial received signal $z_{u,k}^{G+}$ would be processed. Since these signals obviously reflect the weight combining and thereby the IS gains of the G-RAKE+ receiver, $z_{u,k}^{G+}$, $u = 1,...,U$, $k = 1,..., K$, is believed to be a relevant starting point for load estimation.

As stated above, the load estimator operates by processing of the RTWP and in the future possibly the RSEPS. For this reason, similar power signals need to be formed from the $z_{u,k}^{G+}$, $u = 1,...,U$, $k = 1,...,K$, in order to reuse the load concept applied without IS.

Note: It is not dear if the proposed approach to reuse the load concept applied without IS is precise or optimal. At the present time it is the only approach available. A further study using first principles from information theory is recommended in the longer time frame.

## User powers associated with the G-RAKE+ sufficient statistics

Squaring Equation C2 and assuming a low degree of correlation between its three terms, leads to:

$$\left|\hat{z}_{u,k}^{G+}\right|^2 \approx \hat{w}_u^H \hat{h}_u \hat{h}_u^H \hat{w}_u \left|s_{u,k}\right|^2 + \hat{w}_u^H I_{u,k} I_{u,k}^H \hat{w}_u + \hat{w}_u^H N_{u,k} N_{u,k}^H \hat{w}_u \equiv S_{u,k}^{G+} + I_{u,k}^{G+} + N_{u,k}^{G+},$$

$$u = 1,...,U, \quad k = 1,...,K. \quad (C4)$$

The rise over thermal, as seen by user $u$ is now Equation A1, by definition

$$RoT_u^{G+} \equiv \frac{S_u^{G+} + I_u^{G+} + N_u^{G+}}{N_u^{G+}} \quad (C5)$$

$$S_u^{G+} = \sum_{k \in \Omega_u} S_{u,k}^{G+} \quad (C6)$$

$$I_u^{G+} = \sum_k I_{u,k}^{G+} \quad (C7)$$

$$N_u^{G+} = \sum_k N_{u,k}^{G+}. \quad (C8)$$

Note that it is unclear how to distinguish between $S_{u,k}^{G+}$, $I_{u,k}^{G+}$ and $N_{u,k}^{G+}$ for $k \in \Omega_u$. The algorithm disclosed here avoids many of these problems, since both $I_{u,k}^{G+}$ and $N_{u,k}^{G+}$ are computed from other quantities. Note further that in Equation C4 $S_{u,k}^{G+} = \hat{w}_u^H \hat{h}_u \hat{h}_u^H \hat{w}_u \left|s_{u,k}\right|^2$, e.g., the power is expressed starting with the (transmitted) code power $|s_{u,k}|^2$. The same quantity $S_{u,k}^{G+}$ can also be expressed starting with the antenna power $\left|e_{u,k}\right|^2 = \hat{h}_u^H \hat{h}_u \left|s_{u,k}\right|^2$, in which case $S_{u,k}^{G+} = \hat{w}_u^H \hat{w}_u \left|e_{u,k}\right|^2$. This latter setting is used in the link simulations used for validation of the concept. The algorithmic development that follows does however use the definitions Equations C4-C8.

<u>Computation of $S_u^{G+}$</u>

The signal power is computed directly from Equation C6. Using Equations C4 and C6 then results in:

$$S_u^{G+} = \sum_{k\in\Omega_u} S_{u,k}^{G+} = \hat{\mathbf{w}}_u^H \hat{\mathbf{h}}_u \hat{\mathbf{h}}_u^H \hat{\mathbf{w}}_u \sum_{k\in\Omega_u} |s_{u,k}|^2 = \hat{\mathbf{w}}_u^H \hat{\mathbf{h}}_u \hat{\mathbf{h}}_u^H \hat{\mathbf{w}}_u \hat{E}_{s,u} = |\hat{\mathbf{w}}_u^H \hat{\mathbf{h}}_u|^2 \hat{E}_{s,u}, \quad u=1,...,U. \qquad \text{(C9)}$$

Note that computation of the signal energy $\hat{E}_{s,u}$ is quite intricate, including e.g. the involved beta factors.

<u>Computation of $N_u^{G+}$</u> (which is equivalent to $P_N$ discussed herein)

The idea here is to rely on the baseline thermal noise power floor estimation algorithm to estimate the thermal noise power floor before any G-RAKE+ processing. A main problem then arises since the thermal noise is scaled by $\hat{w}_u$ when the sufficient statistics is evaluated. This means that the thermal noise power level will no longer appear constant.

The approach taken here to circumvent this problem builds on the calculation of the scale factor by which the thermal noise power is scaled. To compute this quantity, first note that when the wideband thermal noise power floor is estimated before G-RAKE+ processing, e.g. with the baseline noise floor estimator, the following quantity is estimated:

$$\hat{N} = \frac{1}{M}\sum_{m=1}^{M}\sum_{k=1}^{K}(\mathbf{N}_{u,k}^m)^H \mathbf{N}_{u,k}^m \underset{M\to\infty}{\to} KE[(\mathbf{N}_{u,k})^H \mathbf{N}_{u,k}] = KP_{N_{u,k}} = K\frac{1}{K}P_N = N_0, \qquad \text{(C10)}$$

where $N_0$ is the thermal noise power floor and where $m$ is the sample summation index. The power at the sufficient statistics signal processing point is however

$$\begin{aligned}
\hat{N}^{G+} &= \frac{1}{M}\sum_{m=1}^{M}\sum_{k=1}^{K}(\hat{\mathbf{w}}_u^H \mathbf{N}_{u,k}^m)^H \hat{\mathbf{w}}_u^H \mathbf{N}_{u,k}^m = \frac{1}{M}\sum_{m=1}^{M}\sum_{k=1}^{K} tr\left((\hat{\mathbf{w}}_u^H \mathbf{N}_{u,k}^m)^H \hat{\mathbf{w}}_u^H \mathbf{N}_{u,k}^m\right)\\
&= \frac{1}{M}\sum_{m=1}^{M}\sum_{k=1}^{K} tr\left(\hat{\mathbf{w}}_u^H \mathbf{N}_{u,k}^m (\hat{\mathbf{w}}_u^H \mathbf{N}_{u,k}^m)^H\right) = \frac{1}{M}\sum_{m=1}^{M}\sum_{k=1}^{K} tr\left(\hat{\mathbf{w}}_u^H \mathbf{N}_{u,k}^m (\mathbf{N}_{u,k}^m)^H \hat{\mathbf{w}}_u\right)\\
&= tr\left(\sum_{k=1}^{K}\hat{\mathbf{w}}_u^H \left(\frac{1}{M}\sum_{m=1}^{M}\mathbf{N}_{u,k}^m (\mathbf{N}_{u,k}^m)^H\right)\hat{\mathbf{w}}_u\right) \underset{M\to\infty}{\to} tr\left(K\hat{\mathbf{w}}_u^H E[\mathbf{N}_{u,k}(\mathbf{N}_{u,k})^H]\hat{\mathbf{w}}_u\right)\\
&= tr\left(K\hat{\mathbf{w}}_u^H (N_0/K)\mathbf{I}\hat{\mathbf{w}}_u\right) = \hat{\mathbf{w}}_u^H \hat{\mathbf{w}}_u N_0 = \hat{\mathbf{w}}_u^H \hat{\mathbf{w}}_u \hat{N}.
\end{aligned} \qquad \text{(C11)}$$

The conclusion is that the thermal noise floor at the sufficient statistics signal point can be obtained from the noise floor estimate before G-RAKE+ processing, by a multiplication with the scale factor:

$$\kappa_u^{G+} = (\hat{\mathbf{w}}_u)^H \hat{\mathbf{w}}_u, u=1,...,U. \qquad \text{(C12)}$$

This gives:

$$N_u^{G+} = \kappa_u^{G+}\hat{N}, u=1,...,U. \qquad \text{(C13)}$$

The computation of the scale factor requires an additional inner product for each user.

**Colored noise power floor**

This subsection discusses the case where the result of Equation C10 is replaced by the more general assumption:

$$\frac{1}{M}\sum_{m=1}^{M}\sum_{k=1}^{K}\mathbf{N}_{u,k}^{m}\left(\mathbf{N}_{u,k}^{m}\right)^{H}\xrightarrow[M\to\infty]{}KE\left[\mathbf{N}_{u,k}\left(\mathbf{N}_{u,k}\right)^{H}\right]=K\frac{N_0}{K}\mathbf{R}_N=N_0\mathbf{R}_N, \qquad \text{(C14)}$$

e.g., the case when sampling is fast enough to reflect the shape of the uplink spectrum. In this case it follows that Equation C10 is transformed to:

$$\hat{N}=\frac{1}{M}\sum_{m=1}^{M}\sum_{k=1}^{K}\left(\mathbf{N}_{u,k}^{m}\right)^{H}\mathbf{N}_{u,k}^{m}\xrightarrow[M\to\infty]{}KE\left[\left(\mathbf{N}_{u,k}\right)^{H}\mathbf{N}_{u,k}\right]=Ktr\left(E\left[\mathbf{N}_{u,k}\left(\mathbf{N}_{u,k}\right)^{H}\right]\right)=N_0tr(\mathbf{R}_N). \qquad \text{(C15)}$$

Furthermore, Equation C11 is transformed into:

$$\hat{N}^{G+}=N_0tr\left(\hat{\mathbf{w}}_u^{H}\mathbf{R}_N\hat{\mathbf{w}}_u\right). \qquad \text{(C16)}$$

The end result in this case is the scale factor: **Computation of** $I_u^{G+}$ using **available SINRs**

The code power to interference ratio is:

$$\left(C/I\right)_u^{G+}=\frac{S_u^{G+}}{I_u^{G+}+N_u^{G+}}, \; u=1,...,U. \qquad \text{(C18)}$$

It can be noted that in Equation C18, all quantities except $I_u^{G+}$ have been computed, see Equations C11 and C13. Using these quantities, Equation C18 can be solved for $I_u^{G+}$, giving:

$$I_u^{G+}=\frac{S_u^{G+}}{\left(C/I\right)_u^{G+}}-\kappa_u^{G+}\hat{N}, \; u=1,...,U. \qquad \text{(C19)}$$

The quantity $\left(C/I\right)_u^{G+}$ can be directly related to SINR. This is performed as:

$$\left(C/I\right)_u^{G+}=\frac{\left(\beta_{u,DPCCH}^2+\beta_{u,EDPCCH}^2+n_{u,codes}\beta_{u,EDPDCH}^2\right)}{\beta_{u,DPCCH}^2SF_{u,DPCCH}}SINR_u^{G+}=\frac{\beta_{u,effective}^2}{SF_{u,DPCCH}}SINR_u^{G+}, \qquad \text{(C20)}$$

which gives:

$$I_u^{G+}=\frac{S_u^{G+}}{\left(C/I\right)_u^{G+}}-\kappa_u^{G+}\hat{N}=\frac{SF_{u,DPCCH}}{\beta_{u,effective}^2}\frac{S_u^{G+}}{SINR_u^{G+}}-\kappa_u^{G+}\hat{N}. \qquad \text{(C21)}$$

**Computation of** $RoT_u^{G+}$

When Equations C9, C13, and C21 are inserted in Equation C5, the end result becomes:

$$RoT_u^{G+} = \frac{S_u^{G+} + I_u^{G+} + \kappa_u^{G+}\hat{N}}{\kappa_u^{G+}\hat{N}} = \frac{S_u^{G+}}{\kappa_u^{G+}\hat{N}}\left(1 + \frac{SF_{u,DPCCH}}{\beta_{u,effective}^2}\frac{1}{SINR_u^{G+}}\right), u = 1,...,U. \qquad (C22)$$

These measures, for each user, are then combined into an uplink measure as outlined below. Note that Equation C22 provides some interesting insights. When SINR is high then the RoT for the user is essentially determined by the remaining own power of the user - the RoT then increases when the SINR gets worse.

**Uplink load measure for G-RAKE+**

It is dear that that the user that sees the maximum total load is the one worst off in terms of coverage and stability. That user is hence used to address the load of the UL of the cell. The worst case load is defined by the equations:

$$u_{max} = \arg\max_u\left(RoT_u^{G+}\right) \qquad (C23)$$

$$\max\left(RoT_u^{G+}\right) = RoT_{u_{max}}^{G+} \qquad (C24)$$

where Equation (C23) provides the ID of the worst user, and Equation (C24) provides a look-up calculation of the interference suppressed RoT for that user.

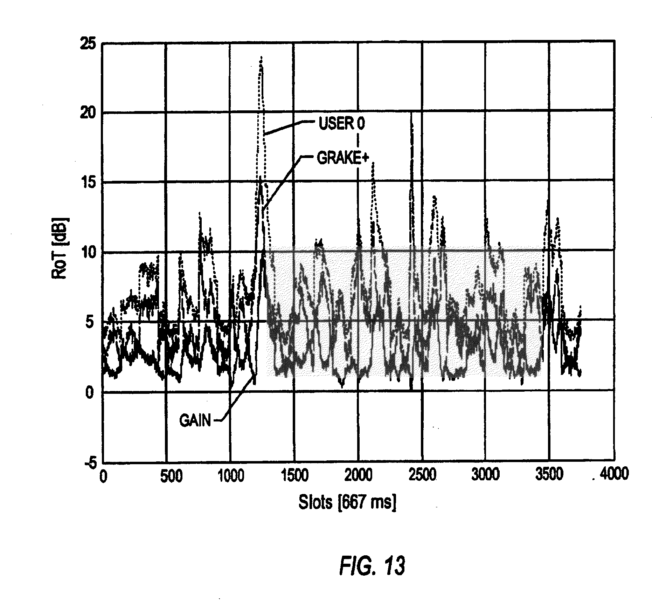

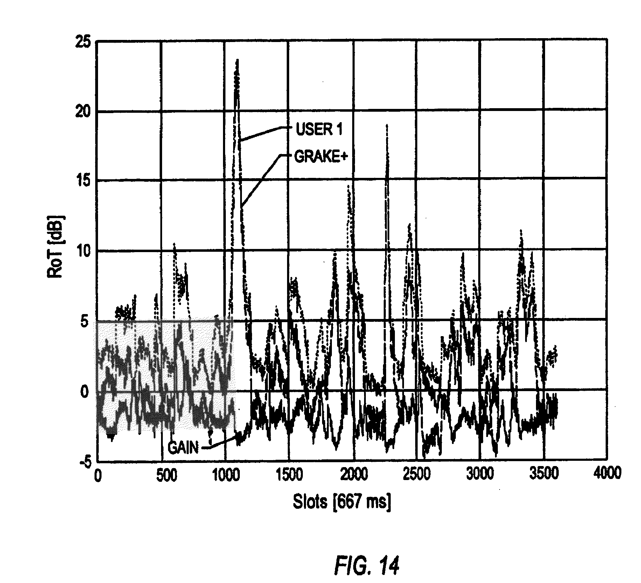

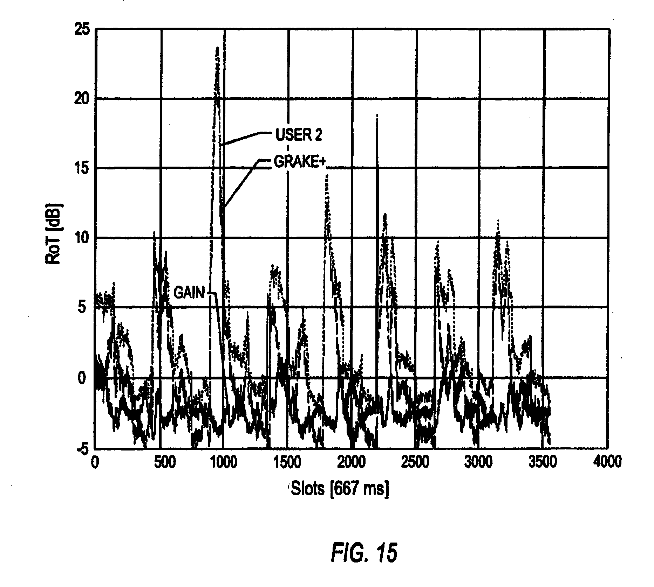

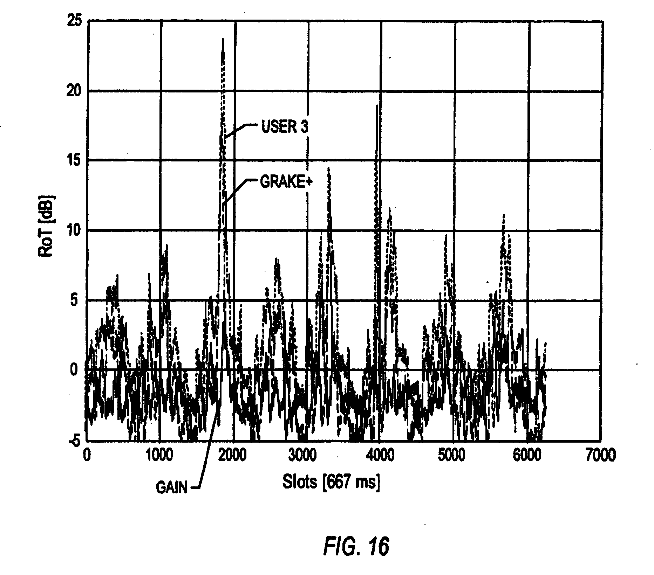

As an example of the performance of the algorithm, Figures 13-16 show the RoT experienced by four 960 kb/sec users in a simulation assuming a 3 kmph pedestrian A channel. It is stressed that all estimates are obtained at slot rate.

**APPENDIX D: INTERFERENCE SUPPRESSED NOISE RISE via G-RAKE+ A load measure directly assessing cell stability after G-RAKE+ processing**

As stated above the RoT is a general load measure in WCDMA systems. Since it includes the neighbor cell interference it e.g., captures coverage effects of load changes. However, sometimes it is desirable to have access to load measures that directly assess the stability only of the serving cell. The purpose of the present section is to define a measure that addresses this need. As used herein $P_N = \hat{N}$.

To achieve this goal it can be noted that in normal operation the uplink cell stability is mainly affected by the powers that are under inner loop power control, by the RBS. This is not perfectly true though, remembering that the inner loop power control loops are nonlinear and coupled and therefore it is not easily guaranteed that large neighbor cell power increases may not affect the cell stability after all. Put otherwise, cell stability is coupled to feasibility which under certain conditions is tied to the RoT.

The above discussion is however somewhat idealized. First, the feasibility analysis is normally based on assumptions that the uplink is shared by a relatively large number of users, allowing interferers to be treated as noise sources. Secondly, the rise over thermal after G-RAKE+ processing is an individual measure for each user - no formal proof is available on its precise relation to the uplink cell load and the cell stability issue. For this reason it seems reasonable to address also other measures than the RoT.

In order to obtain a noise rise measure for stability the neighbor cell interference can be subtracted from the RoT of Equation C5, to yield:

$$NR_u^{G+} = \frac{S_u^{G+} + I_u^{G+} + \kappa_u^{G+}\hat{N} - I_{u,neighbor}^{G+}}{\kappa_u^{G+}\hat{N}}, \quad u = 1,...,U \qquad (D1)$$

This load measure is valid for each user, after G-RAKE+ processing.

**Neighbor cell interference estimation**

In order to come up with an estimate of the neighbor cell interference after G-RAKE+ processing $(I^{G+}_{u,neighbor})$ two simplifying assumptions are necessary. These include

- The own cell interference dominates over the neighbor cell interference. This assumption is surely not always true. However, it is when the own cell interference dominates that stability of the own cell is most at stake - hence the case with dominating neighbor cell interference is less relevant from a stability point of view.
- The neighbor cell interference can be treated as generated by a white noise process.

Using these assumptions the neighbor cell interference can be treated as the thermal noise power floor, resulting in:

$$
\begin{aligned}
\hat{I}^{G+}_{u,neighbor} &= \frac{1}{M}\sum_{m=1}^{M}\sum_{k=1}^{K}\left(\hat{\mathbf{w}}^{H}_{u}\mathbf{I}^{m}_{u,neighbor,k}\right)^{H}\hat{\mathbf{w}}^{H}_{u}\mathbf{I}^{m}_{u,neighbor,k} = \frac{1}{M}\sum_{m=1}^{M}\sum_{k=1}^{K}tr\left(\left(\hat{\mathbf{w}}^{H}_{u}\mathbf{I}^{m}_{u,neighbor,k}\right)^{H}\hat{\mathbf{w}}^{H}_{u}\mathbf{I}^{m}_{u,neighbor,k}\right)\\
&= \frac{1}{M}\sum_{m=1}^{M}\sum_{k=1}^{K}tr\left(\hat{\mathbf{w}}^{H}_{u}\mathbf{I}^{m}_{u,neighbor,k}\left(\hat{\mathbf{w}}^{H}_{u}\mathbf{I}^{m}_{u,neighbor,k}\right)^{H}\right) = \frac{1}{M}\sum_{m=1}^{M}\sum_{k=1}^{K}tr\left(\hat{\mathbf{w}}^{H}_{u}\mathbf{I}^{m}_{u,neighbor,k}\left(\mathbf{I}^{m}_{u,neighbor,k}\right)^{H}\hat{\mathbf{w}}_{u}\right)\\
&= tr\left(\sum_{k=1}^{K}\hat{\mathbf{w}}^{H}_{u}\left(\frac{1}{M}\sum_{m=1}^{M}\mathbf{I}^{m}_{u,neighbor,k}\left(\mathbf{I}^{m}_{u,neighbor,k}\right)^{H}\right)\hat{\mathbf{w}}_{u}\right) \xrightarrow[M\to\infty]{} tr\left(\hat{\mathbf{w}}^{H}_{u}E\left[\mathbf{I}_{u,neighbor}\left(\mathbf{I}_{u,neighbor}\right)^{H}\right]\hat{\mathbf{w}}_{u}\right)\\
&= tr\left(\hat{\mathbf{w}}^{H}_{u}\left(\hat{I}_{u,neighbor}\right)\hat{\mathbf{w}}_{u}\right) = \hat{\mathbf{w}}^{H}_{u}\hat{\mathbf{w}}_{u}\hat{I}_{u,neighbor}.
\end{aligned}
$$

$$(D2)$$

This gives:

$$I^{G+}_{u,neighbor} = \kappa^{G+}_{u}\hat{I}_{u,neighbor}, \quad u = 1,...,U, \tag{D3}$$

where $\hat{I}^{G+}_{u,neighbor}$ is the neighbor cell interference power as estimated before G-RAKE+ processing, e.g., at the same signal point as where $\hat{N}$ is estimated. Note that normally the neighbor cell interference is lower than the own cell interference, therefore the approximations associated with the neighbor cell interference have less impact on the final result than what the corresponding assumptions on the own cell interference would have. This means that the neighbor cell interference may be estimated before G-RAKE+ processing followed by a scaling to achieve a neighbor cell interference value after G-RAKE+ processing.

One set of means that allows for neighbor cell interference estimation before G-RAKE+ processing has e.g. been defined in "Soft Uplink Load Estimation in WCDMA" by T. Wigren in IEEE Trans. Veh. Tech., March 2009, referred to herein as the Wigren Soft Uplink publication, where a quantity representing a sum of neighbor cell interference and thermal noise power is obtained. Since the noise power floor is also estimated it follows that an estimate of the neighbor cell interference can be made available before G-RAKE+ processing. Note that the solution in the Wigren Soft Uplink publication requires that a RAKE receiver for each user is used as well, in order to obtain a measure of all own cell user powers.

**The cell stability load measure for a user after G-RAKE+ interference whitening**

Using Equation C22 and Equations D1 - D3 results in:

$$NR^{G+}_{u} \equiv \frac{S^{G+}_{u} + I^{G+}_{u} + \kappa^{G+}_{u}\hat{N} - I^{G+}_{u,neighbor}}{\kappa^{G+}_{u}\hat{N}} = \frac{S^{G+}_{u}}{\kappa^{G+}_{u}\hat{N}}\left(1 + \frac{SF_{u,EDPCCH}}{\beta^{2}_{u,effective}}\frac{1}{SINR^{G+}_{u}}\right) - \frac{\hat{I}_{neighbor}}{\hat{N}}, \tag{D4}$$

for $u = 1,...,U$ because before G-RAKE+ processing the neighbor cell interference is independent of the user.

**UL load measure for cell stability**

It is dear that that the user that sees the maximum total load is the one worst off in terms of coverage and stability. That user is hence used to address the load of the UL of the cell. The worst case load is defined by the equations:

$$u_{max} = \arg\max_{u}\left(NR_u^{G+}\right) \qquad \text{(D5)}$$

$$\max\left(NR_u^{G+}\right) = NR_{u_{max}}^{G+} \qquad \text{(D6)}$$

where Equation (D5) provides the ID of the worst user, and Equation (D6) provides a look-up calculation of the interference suppressed noise rise for that user. It is stressed that all estimates are obtained at slot rate, e.g., 1500 Hz.

**APPENDIX E: INTERFERENCE SUPPRESSED RoT via FDPE**

**The signal after FDPE**

Using Equations A8 and A12 results in:

$$Z_{pre}(m) = W_{pre}(m)H(m)Z(m) + W_{pre}(m)I(m) + W_{pre}(m)N^{thermal}(m). \qquad \text{(E1)}$$

Here $Z_{pre}(m)$ denotes the pre-equalized wideband signal in the frequency domain, $W_{pre}(m)$ denotes the wideband pre-equalizing filter in the frequency domain, $H(m)$ denotes the wideband net channel response in the frequency domain, $Z(m)$ denotes the wideband transmitted signal in the frequency domain, $I(m)$ denotes the wideband neighbor cell interference in the frequency domain and $N^{thermal}(m)$ denotes the wideband thermal noise floor signal in the frequency domain. Equation E1 is readily transformed to the time domain with an inverse discrete Fourier transformation, rendering:

$$z_{pre}(t) = (w_{pre}h)(t) * z(t) + w_{pre}(t) * i(t) + w_{pre}(t) * n^{thermal}(t), \qquad \text{(E2)}$$

where the star denotes (multi-dimensional) convolution $z_{pre}(t)$ denotes the pre-equalized wideband signal in the time domain, $w_{pre}(t)$ denotes the wideband finite impulse response of the pre-equalizing filter in the time domain, $h(t)$ denotes the wideband finite impulse response net channel response in the time domain, $z(t)$ denotes the wideband transmitted signal in the time domain, $i(t)$ denotes the Wideband neighbor cell interference in the time domain and $n^{thermal}(t)$ denotes the wideband thermal noise floor signal in the time domain. It is important to understand that all signal quantities are here given before the pre-equalization step.

**Measuring load after FDPE**

To obtain a measure of the load after FDPE interference whitening the RoT after this step is considered. This is in fact more appealing than for the G-RAKE+ receiver in that the whole uplink load is addressed at the same time. The RoT measure after FDPE processing is given by:

$$RoT^{FDPE}(t) = \frac{z_{pre}^H(t)z_{pre}(t)}{E\left[\left(w_{pre}(t) * n^{thermal}(t)\right)^H \left(w_{pre}(t) * n^{thermal}(t)\right)\right]}. \qquad \text{(E3)}$$

The numerator of Equation E3 is straightforward to compute. Noting that the time scale for the RoT measurement in WCDMA is normally a transmission time interval (TTI), it follows that the numerator of Equation E3 can be computed e.g. by an average of time samples over the TTI of interest (typically 2 ms or 10 ms).

The computation of the denominator of Equation E3 requires an evaluation of the expectation of that expression. This can be done assuming the thermal noise to be white and *stationary*, which is a standard assumption. Note that the evolution here therefore is performed over the time interval where the pre-equalization filter remains constant. It then

follows that

$$E\left[\left(w_{pre}(t)*n^{thermal}(t)\right)^H \left(w_{pre}(t)*n^{thermal}(t)\right)\right]$$

$$= E\left[\sum_{l_1=0}^{L-1}\left(n^{thermal}(t-l_1)\right)^H w_{pre}^H(l_1)\sum_{l_2=0}^{L-1}w_{pre}(l_2)n^{thermal}(t-l_2)\right]$$

$$= E\left[\left(\sum_{l_1=0}^{L-1}\sum_{l_2=0}^{L-1}\left(n^{thermal}(t-l_1)\right)^H w_{pre}^H(l_1)w_{pre}(l_2)n^{thermal}(t-l_2)\right)\right]$$

$$= E\left[\sum_{l_1=0}^{L-1}\sum_{l_2=0}^{L-1}w_{pre}^H(l_1)w_{pre}(l_2)\left(n^{thermal}(t-l_1)\right)^H n^{thermal}(t-l_2)\right]$$

$$= \sum_{l_1=0}^{L-1}\sum_{l_2=0}^{L-1}w_{pre}^H(l_1)w_{pre}(l_2)E\left[\left(n^{thermal}(t-l_1)\right)^H n^{thermal}(t-l_2)\right]$$

$$\sum_{l_1=0}^{L-1}\sum_{l_2=0}^{L-1}w_{pre}^H(l_1)w_{pre}(l_2)\delta_{l_1,l_2}\sum_{a=1}^{A}\hat{N}_a^{thermal} = \left(\sum_{l=0}^{L-1}w_{pre}^H(l)w_{pre}(l)\right)\left(\sum_{a=1}^{A}\hat{N}_a^{thermal}\right). \qquad \textbf{(E4)}$$

In Equation E4, $\hat{N}_a^{thermal}$ denotes the estimated thermal noise floor of antenna branch a, before pre-equalization. As used herein $P_N = \hat{N}$. This means that the noise floor estimation algorithms of the Wigren Soft Uplink publication, "Estimation of Uplink WCDMA load in a Single RBS" by T. Wigren and P. Hellqvist in Proc. IEEE VTC-2007 Fall, Baltimore, MD, Oct. 1-3 2007 (referred to herein as the Wigren Single RBS publication), and/or "Recursive Noise Floor Estimation in WCDMA" by T. Wigren in IEEE Trans. Veh. Tech. vol. 59, no. 5, pp. 2615-2620, 2010 (referred to herein as the Wigren Recursive publication) can be re-used. One algorithm is needed for each antenna branch. Combining Equations E3 and E4 results in:

$$RoT^{FDPE} = \frac{z_{pre}^H(t)z_{pre}(t)}{\left(\sum_{l=0}^{L-1}w_{pre}^H(l)w_{pre}(l)\right)\left(\sum_{a=1}^{A}\hat{N}_a^{thermal}\right)}. \qquad \textbf{(E5)}$$

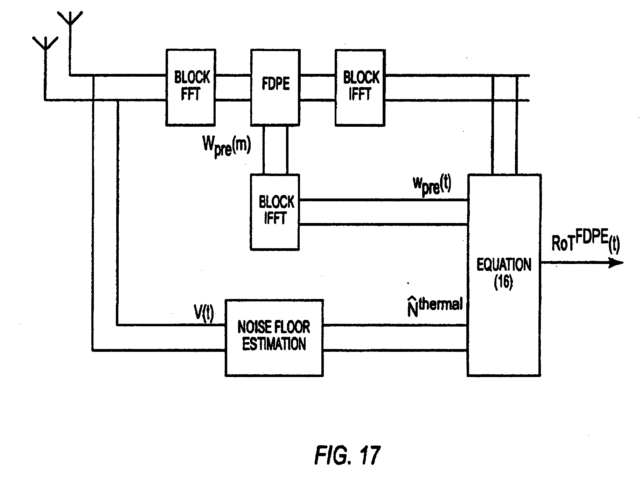

The quantities above should be computed as averages or estimates over a time interval where the whitening filter of the FDOE remains constant. The result is intuitive. Since the total received wideband power is summed over all antenna branches, so is the thermal noise power floor. The RoT after FDPE is also scaled with the power of the pre-whitening filter. A block diagram of the load estimation solution is depicted in Figure 17. Only the FDPE blocks are shown there.

## APPENDIX F: INTERFERENCE SUPPRESSED NOISE RISE via FDPE

### Measuring stability related load after FDPE

To obtain a measure of the load after the FDPE Interference whitening, the RoT after this step is first considered. As used herein $P_N = \hat{N}$. The RoT measure after FDPE processing is given by:

$$RoT^{FDPE}(t) = \frac{z_{pre}^H(t)z_{pre}(t)}{E\left[\left(w_{pre}(t)*n^{thermal}(t)\right)^H\left(w_{pre}(t)*n^{thermal}(t)\right)\right]} \qquad \text{(F1)}$$

In order to address the stability related load the neighbor cell interference, as seen after the FDPE processing needs to be subtracted from the numerator. This follows since the neighbor cell interference does not affect the stability of the own cell since the neighbor cell interference is not controlled by said first cell, e.g.,

$$NR^{FDE}(t) = \frac{z_{pre}^H(t)z_{pre}(t) - \hat{I}_{pre}^{neighbor}(t)}{E\left[\left(w_{pre}(t)*n^{thermal}(t)\right)^H\left(w_{pre}(t)*n^{thermal}(t)\right)\right]}, \qquad \text{(F2)}$$

where $\hat{I}_{pre}^{neighbor}(t)$ is the neighbor cell interference as seen after FDPE processing. The first part of the numerator of Equation F2 is computed as in Appendix E.

In order to come up with an estimate of the neighbor cell interference after FDPE processing ( $\hat{I}_{pre}^{neighbor}$ ) two simplifying assumptions are necessary. These include

- The own cell interference dominates over the neighbor cell interference. This assumption is surely not always true. However, it is when the own cell interference dominates that stability of the own cell is most at stake - hence the case with dominating neighbor cell interference is less relevant from a stability point of view.
- The neighbor cell interference can be treated as generated by a white noise process.

Using these assumptions the neighbor cell interference can be treated as the thermal noise power floor, resulting in:

$$\hat{I}_{pre}^{neighbor}(t) = E\left[\left(w_{pre}(t)*i^{neighbor}(t)\right)^H\left(w_{pre}(t)*i^{neighbor}(t)\right)\right]$$

$$= E\left[\sum_{l_1=0}^{L-1}\left(i^{neighbor}(t-l_1)\right)^H w_{pre}^H(l_1)\sum_{l_2=0}^{L-1} w_{pre}(l_2)i^{neighbor}(t-l_2)\right]$$

$$= E\left[\left(\sum_{l_1=0}^{L-1}\sum_{l_2=0}^{L-1}\left(i^{neighbor}(t-l_1)\right)^H w_{pre}^H(l_1)w_{pre}(l_2)i^{neighbor}(t-l_2)\right)\right]$$

$$= E\left[\sum_{l_1=0}^{L-1}\sum_{l_2=0}^{L-1} w_{pre}^H(l_1)w_{pre}(l_2)\left(i^{neighbor}(t-l_1)\right)^H i^{neighbor}(t-l_2)\right]$$

$$= \sum_{l_1=0}^{L-1}\sum_{l_2=0}^{L-1} w_{pre}^H(l_1)w_{pre}(l_2)E\left[\left(i^{neighbor}(t-l_1)\right)^H i^{neighbor}(t-l_2)\right]$$

$$\sum_{l_1=0}^{L-1}\sum_{l_2=0}^{L-1} w_{pre}^H(l_1)w_{pre}(l_2)\delta_{l_1,l_2}\hat{I}^{neighbor}(t) = \sum_{l=0}^{L-1} w_{pre}^H(l)w_{pre}(l)\hat{I}^{neighbor}(t) \qquad \text{(F3)}$$

Here $\hat{I}_{pre}^{neighbor}(t)$ is the neighbor cell interference power as estimated before FDPE processing, e.g., at the same signal point as where $\hat{N}$ is estimated. Note that normally the neighbor cell interference is lower than the own cell interference, therefore the approximations associated with the neighbor cell interference have less impact on the final result than what the corresponding assumptions on the own cell interference would have. This means that the neighbor cell interference may be estimated before FDPE processing followed by a scaling to achieve a neighbor cell interference value after FDPE processing.

One set of means that allows for neighbor cell interference estimation before FDPE processing has e.g. been defined in the Wigren Soft Uplink publication, where a quantity representing a sum of neighbor cell interference and thermal noise power is obtained. Since the noise power floor is also estimated it follows that an estimate of the neighbor cell interference can be made available before FDPE processing. Note that the solution in the Wigren Soft Uplink publication requires that a RAKE receiver for each user is used as well, in order to obtain a measure of all own cell user powers.

The computation of the denominator of Equation F2 is performed as in Appendix E. Combining Equations F2, F3, and F4 results in:

$$
NF^{FDPE}(t) = \frac{z_{pre}^H(t)z_{pre}(t) - \left(\sum_{l=0}^{L-1} w^H(l)w(l)\right)\hat{I}^{neighbor}(t)}{\left(\sum_{l=0}^{L-1} w_{pre}^H(l)w_{pre}(l)\right)\left(\sum_{a=1}^{A} \hat{N}_a^{thermal}\right)}
$$

$$
= \frac{z_{pre}^H(t)z_{pre}(t)}{\left(\sum_{l=0}^{L-1} w_{pre}^H(l)w_{pre}(l)\right)\left(\sum_{a=1}^{A} \hat{N}_a^{thermal}\right)} - \frac{\hat{I}^{neighbor}(t)}{\left(\sum_{a=1}^{A} \hat{N}_a^{thermal}\right)}. \qquad \text{(F4)}
$$

The quantities above should be computed as averages or estimates over a time interval where the interference suppressing filter of the FDPE remains constant The result is intuitive. Since the total received Wideband power is summed over all antenna branches, so is the thermal noise power floor. The RoT after FDPE is also scaled with the power of the equalizing filter.

**APPENDIX G: INTERFERENCE SUPPRESSED RoT via FDE**

**The signal after FDE**

Using Equations A14 and A16 results in:

$$
Z_{FDE}(m) = W(m)H(m)Z(m) + W(m)I(m) + W(m)N^{thermal}(m). \qquad \text{(G1)}
$$

Here $Z_{FDE}(m)$ denotes the pre-equalized wideband signal in the frequency domain, $W(m)$ denotes the Wideband MMSE equalizing filter in the Frequency domain, H(m) denotes the wideband net channel response in the frequency domain, Z(m) denotes the wideband transmitted signal in the frequency domain, $I(m)$ denotes the wideband neighbor cell interference in the frequency domain and $N^{thermal}(m)$ denotes the Wideband thermal noise floor signal in the frequency domain. All signals are vector valued. Equation G1 is readily transformed to the time domain with an inverse discrete Fourier transformation, rendering:

$$
z_{FDE}(t) = (wh)(t) * z(t) + w(t) * i(t) + w(t) * n^{thermal}(t), \qquad \text{(G2)}
$$

where the star denotes (multi-dimensional) convolution, $z_{pre}(t)$ denotes the equalized wideband signal in the time domain, $w(t)$ denotes the wideband finite impulse response of the equalizing filter in the time domain, $h(t)$ denotes the wideband finite impulse response net channel response in the time domain, $z(t)$ denotes the wideband transmitted signal in the time domain, $i(t)$ denotes the wideband neighbor cell interference in the time domain and $n^{thermal}(t)$ denotes the wideband thermal noise floor signal in the time domain.

Using Equations A14 and A16 results in the following equation, where u denotes user U

$$Z_{FDE,n}(m) = W_n(m)H_n(m)Z(m) + W_n(m)I(m) + W_n(m)N^{thermal}(m) \qquad (G3)$$

Here $Z_{FDE,n}(m)$ denotes the pre-equalized wideband signal in the frequency domain, $W_n(m)$ denotes the wideband MMSE equalizing filter in the frequency domain, $H_n(m)$ denotes the wideband net channel response in the frequency domain, $Z(m)$ denotes the wideband transmitted signal in the frequency domain, $I(m)$ denotes the wideband neighbor cell interference in the frequency domain and $N^{thermal}(m)$ denotes the wideband thermal noise floor signal in the frequency domain. All signals are vector valued. Equation G3 is readily transformed to the time domain with an inverse discrete Fourier transformation, rendering:

$$z_{FDE,n}(t) = (w_n h_n)(t) * z(t) + w_n(t) * i(t) + w_n(t) * n^{thermal}(t), \qquad (G4)$$

where the star denotes (multi-dimensional) convolution, $z_{pre,n}(t)$ denotes the equalized wideband signal in the time domain, $w_n(t)$ denotes the wideband finite impulse response of the equalizing filter in the time domain, $h_n(t)$ denotes the wideband finite impulse response net channel response in the time domain, $z(t)$ denotes the wideband transmitted signal in the time domain, $i(t)$ denotes the wideband neighbor cell interference in the time domain and $n^{thermal}(t)$ denotes the wideband thermal noise floor signal in the time domain.

## Measuring load after FDE

To obtain a measure of the load after the FDE interference whitening, the RoT after this step is considered. The RoT measure after FDPE processing is given by:

$$RoT_n^{FDE}(t) = \frac{z_{FDE,n}^H(t)z_{FDE,n}(t)}{E\left[\left(w_n(t) * n^{thermal}(t)\right)^H \left(w_n(t) * n^{thermal}(t)\right)\right]}. \qquad (G5)$$

The numerator of Equation G5 is straightforward to compute. Noting that the time scale for the RoT measurement in WCDMA is normally a transmission time interval (TTI), it follows that the numerator of Equation G5 can be computed e.g. by an average of time samples over the TTI of interest (typically 2 ms or 10 ms).

The computation of the denominator of Equation G5 requires an evaluation of the expectation of that expression. This can be done assuming the thermal noise to be white and *stationary,* which is a standard assumption. Note that the evolution here therefore is performed over the time interval where the pre-equalization filter remains constant. It then follows that:

$$E\left[\left(w_u(t) * n^{thermal}(t)\right)^H \left(w_u(t) * n^{thermal}(t)\right)\right]$$

$$= E\left[\sum_{l_1=0}^{L-1} \left(n^{thermal}(t-l_1)\right)^H w_u^H(l_1) \sum_{l_2=0}^{L-1} w_u(l_2) n^{thermal}(t-l_2)\right]$$

$$= E\left[\left(\sum_{l_1=0}^{L-1} \sum_{l_2=0}^{L-1} \left(n^{thermal}(t-l_1)\right)^H w_u^H(l_1) w_u(l_2) n^{thermal}(t-l_2)\right)\right]$$

$$= E\left[\sum_{l_1=0}^{L-1} \sum_{l_2=0}^{L-1} w_u^H(l_1) w_u(l_2) \left(n^{thermal}(t-l_1)\right)^H n^{thermal}(t-l_2)\right]$$

$$= \sum_{l_1=0}^{L-1} \sum_{l_2=0}^{L-1} w_u^H(l_1) w_u(l_2) E\left[\left(n^{thermal}(t-l_1)\right)^H n^{thermal}(t-l_2)\right]$$

$$\sum_{l_1=0}^{L-1} \sum_{l_2=0}^{L-1} w_u^H(l_1) w_u(l_2) \delta_{l_1,l_2} \sum_{a=1}^{A} \hat{N}_a^{thermal} = \left(\sum_{l=0}^{L-1} w_u^H(l) w_u(l)\right)\left(\sum_{a=1}^{A} \hat{N}_a^{thermal}\right). \qquad \text{(G6)}$$

In Equation G4, $\hat{N}_a^{thermal}$ denotes the estimated thermal noise floor of antenna branch a, before pre-equalization. As used herein $P_N = \hat{N}$. This means that the noise floor estimation algorithms of the Wigren Soft Uplink publication, the Wigren Single RBS publication, and/or the Wigren Recursive Publication can be re-used. One algorithm is needed for each antenna branch. Combining Equations G5 and G6 results in:

$$RoT_u^{FDE} = \frac{z_{FDE,u}^H(t) z_{FDE,u}(t)}{\left(\sum_{l=0}^{L-1} w_u^H(l) w_u(l)\right)\left(\sum_{a=1}^{A} \hat{N}_a^{thermal}\right)}, u = 1,...,U \qquad \text{(G7)}$$

The quantities above should be computed as averages or estimates over a time interval where the equalizing filter of the FDE remains constant. The result is intuitive. Since the total received wideband power is summed over all antenna branches, so is the thermal noise power floor. The RoT after FDE is also scaled with the power of the equalizing filter.

The above discussion has focused on a single user. However, what is interesting is a load measure for the complete uplink. Since it is likely that it is the user that experiences the highest load that limits the uplink, the uplink load is defined to be:

$$RoT = \max_u RoT_u^{FDE}, \qquad \text{(G8)}$$

where $RoT_u^{FDE}$ is the noise rise of user u.

## APPENDIX H: INTERFERENCE SUPPRESSED NOISE RISE via FDE

### Measuring stability related load after FDE

To obtain a measure of the load after the FDE interference whitening, the RoT after this step is first considered. As used herein $P_N = \hat{N}$. The RoT measure after FDE processing is given by:

$$RoT_u^{FDE}(t) = \frac{z_{FDE,u}^H(t)z_{FDE,u}(t)}{E\left[\left(w_u(t) * n^{thermal}(t)\right)^H \left(w_u(t) * n^{thermal}(t)\right)\right]}.$$ (H1)

In order to address the stability related load the neighbor cell interference, as seen after the FDE processing needs to be subtracted from the numerator. This follows since the neighbor cell interference does not affect the stability of the own cell since the neighbor cell interference is not controlled by said first cell, e.g.,

$$NR_u^{FDE}(t) = \frac{z_{FDE,u}^H(t)z_{FDE,u}(t) - \hat{I}_{FDE,u}^{neighbor}(t)}{E\left[\left(w_u(t) * n^{thermal}(t)\right)^H \left(w(t) * n^{thermal}(t)\right)\right]},$$ (H2)

where $\hat{I}_{FDE,u}^{neighbor}(t)$ is the neighbor cell interference - *again experienced by a specific user.* The first part of the numerator of Equation H2 is computed as in Appendix G.

In order to come up with an estimate of the neighbor cell interference after FDE processing ($\hat{I}_{FDE,u}^{neighbor}$) two simplifying assumptions are necessary. These include:

- The own cell interference dominates over the neighbor cell interference. This assumption is surely not always true. However, it is when the own cell interference dominates that stability of the own cell is most at stake - hence the case with dominating neighbor cell interference is less relevant from a stability point of view.
- The neighbor cell interference can be treated as generated by a white noise process.

Using these assumptions the neighbor cell interference can be treated as the thermal noise power floor, resulting in:

$$\hat{I}_{FDE,u}^{neighbor}(t) = E\left[\left(w_u(t) * i^{neighbor}(t)\right)^H \left(w_u(t) * i^{neighbor}(t)\right)\right]$$

$$= E\left[\sum_{l_1=0}^{L-1}\left(i^{neighbor}(t-l_1)\right)^H w_u^H(l_1)\sum_{l_2=0}^{L-1} w_u(l_2) i^{neighbor}(t-l_2)\right]$$

$$= E\left[\left(\sum_{l_1=0}^{L-1}\sum_{l_2=0}^{L-1}\left(i^{neighbor}(t-l_1)\right)^H w_u^H(l_1)w_u(l_2) i^{neighbor}(t-l_2)\right)\right]$$

$$= E\left[\sum_{l_1=0}^{L-1}\sum_{l_2=0}^{L-1} w_u^H(l_1)w_u(l_2)\left(i^{neighbor}(t-l_1)\right)^H i^{neighbor}(t-l_2)\right]$$

$$= \sum_{l_1=0}^{L-1}\sum_{l_2=0}^{L-1} w_u^H(l_1)w_u(l_2) E\left[\left(i^{neighbor}(t-l_1)\right)^H i^{neighbor}(t-l_2)\right]$$

$$\sum_{l_1=0}^{L-1}\sum_{l_2=0}^{L-1} w_u^H(l_1)w_u(l_2)\delta_{l_1,l_2}\hat{I}^{neighbor}(t) = \sum_{l=0}^{L-1} w_u^H(l)w_u(l)\hat{I}^{neighbor}(t)$$ (H3)

Here $\hat{I}^{neighbor}(t)$ is the neighbor cell interference power as estimated before FDE processing, e.g., at the same signal point as where $\hat{N}$ is estimated. Note that normally the neighbor cell interference is lower than the own cell interference, therefore the approximations associated with the neighbor cell interference have less impact on the final result than what the corresponding assumptions on the own cell interference would have. This means that the neighbor cell interference may be estimated before FDE processing followed by a scaling to achieve a neighbor cell interference value after FDE processing.

One set of means that allows for neighbor cell interference estimation before FDE processing has e.g. been defined in the Wigren Soft Uplink publication, where a quantity representing a sum of neighbor cell interference and thermal noise power is obtained. Since the noise power floor is also estimated it follows that an estimate of the neighbor cell interference can be made available before FDE processing. Note that the solution in the Wigren Soft Uplink publication requires that a RAKE receiver for each user is used as well, in order to obtain a measure of all own cell user powers.

The computation of the denominator of Equation H2 is performed as in Appendix G. Combining Equations G4, H2, and H3 results in:

$$NF_u^{FDE}(t) = \frac{z_{FDE,u}^H(t)z_{FDE,u}(t) - \left(\sum_{l=0}^{L-1} w_u^H(l)w_u(l)\right)\hat{I}^{neighbor}(t)}{\left(\sum_{l=0}^{L-1} w_u^H(l)w_u(l)\right)\left(\sum_{a=1}^{A} \hat{N}_a^{thermal}\right)}$$

$$= \frac{z_{FDE,u}^H(t)z_{FDE,u}(t)}{\left(\sum_{l=0}^{L-1} w_u^H(l)w_u(l)\right)\left(\sum_{a=1}^{A} \hat{N}_a^{thermal}\right)} - \frac{\hat{I}^{neighbor}(t)}{\left(\sum_{a=1}^{A} \hat{N}_a^{thermal}\right)}. \qquad (H4)$$

The quantities above should be computed as averages or estimates over a time interval where the equalizing filter of the FDE remains constant. The result is intuitive. Since the total received wideband power is summed over all antenna branches, so is the thermal noise power floor. The RoT after FDE is also scaled with the power of the equalizing filter.

The above discussion has focused on a single user. However, what is interesting is a load measure for the complete uplink. Since it is likely that it is the user that experiences the highest load that limits the uplink, the uplink load relevant for stability is defined to be:

$$NF^{FDE} = \max_u NF_u^{FDE}, \qquad (H5)$$

where $NF_u^{FDE}$ is the noise rise of user k.

**APPENDIX I: COORDINATING OPERATIONS**

1. Interference management in a coordinating node (e.g., RNC, O&M, SON or a coordinating RRM node), that are responsive at least to one of i) the signaled neighbor cell interference after IS processing from the RBS, ii) the rise over thermal after IS processing with the G-RAKE+, the FDE or the FDPE , iii) the noise rise relevant for stability after IS processing with the G-RAKE+, FDE or FDPE, said noise rise being based on the neighbor cell interference, after interference suppression processing, iv) Reference Received Total Wideband Power of a cell, e.g., the noise floor, obtained after interference suppression, based on the G-RAKE+, FDE, or FDPE, where the said interference management means comprise e.g. the use of any of: power adjustment/control, admission control, congestion control, handover or load balancing.

2. Interference management in RBSs of surrounding cells, said interference management being responsive to at least one of i) neighbor cell interference, ii) the rise over thermal after interference suppression processing with the G-RAKE+, the FDE or the FDPE,iii) the noise rise relevant for stability after interference suppression processing with the G-RAKE+, FDE or FDPE, said noise rise being based on the neighbor cell interference, after interference suppression processing, iv) Reference Received Total Wideband Power of a cell, e.g., the noise floor obtained after interference suppression, based on the G-RAKE+, FDE, or FDPE.

3. Signaling and interference management enabling the use of the following estimated quantities in multi-RAT and/or multi-standard nodes: i) neighbor cell interference, ii) the rise over thermal after interference suppression processing with the G-RAKE+, the FDE or the FDPE,iii) the noise rise relevant for stability after interference suppression processing with the G-RAKE+, FDE or FDPE, said noise rise being based on the neighbor cell interference, after interference suppression processing, iv) Reference Received Total Wideband Power of a cell, e.g., the noise floor obtained after interference suppression, based on the G-RAKE+, FDE, or FDPE.

4. Signaling and interference management over the interfaces and algorithms of the neighbor cell interference power and/or the load in terms of i) the rise over thermal after interference suppression processing with the G-RAKE+, the FDE or the FDPE, and ii) the noise rise relevant for stability after interference suppression processing with the G-RAKE+, FDE or FDPE, said noise rise being based on the neighbor cell interference, after interference suppression processing, iv) Reference Received Total Wideband Power of a cell, e.g., the noise floor, obtained after interference suppression, based on the G-RAKE+, FDE, or FDPE, where the signaled quantities are signaled for a subset of time and/or frequency domain resources and where the time and/or frequency domain resources comprise e.g. a subset of time instances (for example, in TTIs) and a subset of frequency sub-carriers in a multi-carrier (MC) system, respectively.

5. Using the estimated UL neighbor cell interference, the noise floor, or the UL load estimates obtained after interference suppression processing in a RBS for controlling or adjusting the RBS' maximum DL transmit power, where the controlling may be a test or a requirement regulating the maximum transmit power of the RBS such as HNB.

6. Determining the reference point for the received power, interference and noise measurements after the antenna connector, which may also be used as the reference point specified for requirements (e.g. core requirements or performance requirements) and may also be used in testing at least one functionality, where the functionality may e.g. relate to the node's or terminal ability to cope with high interference.

**Claims**

1. A network node (300) configured to signal interference suppressed information to one or more remote nodes (100, 200) in a wireless network (10), said interference suppressed information comprising information about the interference after interference suppression, the network node (300) comprising:

   an information unit (310) configured to process a received signal using an interference suppression receiver to suppress interference in the received signal to determine the interference suppressed information, said interference suppressed information comprising an interference suppressed noise floor associated with a cell (12) of a radio network node (100) in the wireless network (10); and
   a signaling unit (330) configured to signal the interference suppressed information to a remote node (100, 200) in the wireless network (10) via an interface (50) communicatively coupling the network node (300) to the remote node (100, 200), the signaling unit (330) further being configured to signal a capability indication indicating at least one of an ability of the network node (300) to address interference, an ability of the network node (300) to signal the interference suppressed information, and whether interference suppression has been applied to signaled information.
   wherein the interference suppressed information is obtained from a noise floor estimate before G-RAKE+ processing, multiplied by a scale factor, which scale factor comprises G-RAKE+ combining weights.

2. The network node (300) of claim 1 wherein the network node (300) comprises the radio network node (100) comprising one of a radio base station (100) and a location measurement unit (100) in the wireless network (10), said radio network node (100) including a receiver (310) configured to receive a signal, and wherein the information unit (310) is **characterized by** comprising:

   an interference suppression unit (312) comprising the interference suppression receiver and configured to process the received signal to suppress interference in the received signal to determine an interference suppressed signal; and
   a measurement unit (314) configured to determine the interference suppressed information based on the interference suppressed signal.

3. The network node (300) of claim 2 wherein the measurement unit (314) is configured to determine the interference suppressed load by determining the interference suppressed neighbor cell interference based on the interference suppressed signal, and determining an interference suppressed noise rise based on the interference suppressed neighbor cell interference, and wherein the signaling unit (330) signals the interference suppressed information by signaling the interference suppressed load in terms of the interference suppressed noise rise.

4. The network node (300) of claim 2 wherein the receiver (110) is further configured to receive an interference management instruction derived based on the interference suppressed information from the remote network node (100, 200), and wherein the network node (300) further comprises a coordinating unit (325) configured to execute the received interference management instruction.

5. The network node (300) of claim 1 wherein the network node (300) comprises a radio network controller (200), and wherein the information unit (310) is **characterized by** comprising:

a requesting unit (316) configured to request the interference suppressed information from a first radio network node (100), wherein said first radio network node determined the requested interference suppressed information using the interference suppression receiver; and
a receiver (318) configured to receive the requested interference suppressed information from the first radio network node (100).

6. The network node (300) of claim 5 further comprising a coordinating unit (320) configured to generate an interference management instruction based on the received interference suppressed information, and to signal the interference management instruction to the first radio network node (100).

7. The network node (300) of claim 5 further comprising a coordinating unit (320) configured to generate an interference management instruction based on the received interference suppressed information, wherein the signaling unit (330) is further configured to signal the interference management instruction to a second radio network node (100).

8. The network node (300) of claim 5 wherein the remote node (100, 200) comprises a second radio network controller (200), and wherein the signaling unit (330) is configured to signal the interference suppressed information by signaling at least one of an interference suppressed rise over thermal and an interference suppressed noise rise to the second radio network controller (200).

9. The network node (300) of claim 5 wherein the remote network node (100, 200) comprises a second radio network node (100).

10. A method of signaling interference suppressed information comprising information about interference after interference suppression between network nodes (300) in a wireless network (10), the method comprising :

processing a received signal using an interference suppression receiver to suppress interference in the received signal to determine the interference suppressed information, said interference suppressed information comprising an interference suppressed noise floor associated with a cell (12) of a radio network node (100) in the wireless network (10);
signaling the interference suppressed information to a remote network node (100, 200) in the wireless network (10) via an interface (50) communicatively coupling a network node (300) to the remote network node (100, 200), and
signaling a capability indication indicating at least one of an ability of the network node (300) to address interference, an ability of the network node to signal the interference suppressed information, and whether interference suppression has been applied to signaled information,
wherein the interference suppressed information is obtained from a noise floor estimate before G-RAKE+ processing, multiplied by a scale factor, which scale factor comprises G-RAKE+ combining weights.

11. The method of claim 10 wherein the network node (300) comprises a radio network node (100) comprising one of a radio base station and a location measurement unit in the wireless network (10), the method further comprising receiving a signal, wherein the determining the interference suppressed information comprises:

processing the received signal using the interference suppression receiver to suppress interference in the received signal to determine an interference suppressed signal; and
determining the interference suppressed information based on the interference suppressed signal.

12. The method of claim 11 further comprising measuring the interference on at least one of pre-defined time-domain radio resources and pre-defined frequency-domain radio resources.

13. The method of claim 11 wherein determining the interference suppressed load comprises determining the interference suppressed neighbor cell interference based on the interference suppressed signal, and determining an interference suppressed noise rise based on the interference suppressed neighbor cell interference, and wherein the signaling the interference suppressed information comprises signaling the interference suppressed load in terms of the interference suppressed noise rise.

14. The method of claim 11 further comprising adjusting downlink transmit power of the radio network node based on the interference suppressed information.

15. The method of claim 11 further comprising receiving an interference management instruction derived based on the interference suppressed information from the remote network node (100, 200), and executing the received management instruction.

16. The method of claim 15 wherein the received interference management instruction comprises at least one of a power setting instruction, an admission control instruction, a congestion control instruction, a scheduling instruction, a handover instruction, and a load balancing instruction.

17. The method of claim 10 wherein the network node (300) comprises a radio network controller (200), and wherein determining the interference suppressed information comprises:

requesting the interference suppressed information from a first radio network node (100) that determined the requested interference suppressed information using the interference suppression receiver; and

receiving the requested interference suppressed information from the first radio network node (100).

18. The method of claim 17 further comprising generating an interference management instruction based on the received interference suppressed information, and signaling the interference management instruction to at least one of the first radio network node (100) and a second radio network node (200).

19. The method of claim 17 wherein the remote node (100, 200) comprises a second radio network controller (200).

20. The method of claim 17 wherein the remote network node (100, 200) comprises a second radio network node (100).

**Patentansprüche**

1. Netzknoten (300), der dafür konfiguriert ist, Störungsunterdrückungsinformation an einen oder mehrere entfernte Knoten (100, 200) in einem drahtlosen Netz (10) zu melden, wobei die Störungsunterdrückungsinformation Information über die Störung nach Störungsunterdrückung umfasst, wobei der Netzknoten (300) umfasst:

eine Informationseinheit (310), die dafür konfiguriert ist, ein empfangenes Signal unter Verwendung eines Störungsunterdrückungsempfängers so zu verarbeiten, dass Störung im empfangenen Signal unterdrückt wird, um Störungsunterdrückungsinformation zu bestimmen, wobei die Störungsunterdrückungsinformation ein nach Störungsunterdrückung verbleibendes Grundrauschen umfasst, das einer Zelle (12) eines Funknetzknoten (100) im drahtlosen Netz (10) zugeordnet ist; und

eine Meldeeinheit (330), die dafür konfiguriert ist, die Störungsunterdrückungsinformation an einen entfernten Knoten (100, 200) im drahtlosen Netz (10) über eine Schnittstelle (50) zu melden, die den Netzknoten (300) mit dem entfernten Knoten (100, 200) kommunikationsmäßig koppelt, wobei die Meldeeinheit (330) ferner dafür konfiguriert ist, eine Fähigkeitsangabe zu melden, die mindestens eines von Folgendem angibt, nämlich eine Fähigkeit des Netzknotens (300), Störung anzugehen, eine Fähigkeit des Netzknotens (300), die Störungsunterdrückungsinformation zu melden und zu melden, ob Störungsunterdrückung auf die gemeldete Information angewendet worden ist.

wobei die Störungsunterdrückungsinformation aus einem Grundrauschschätzwert vor der G-RAKE+Verarbeitung, multipliziert mit einem Skalierungsfaktor, gewonnen wird, wobei der Skalierungsfaktor G-RAKE +Kombinationsgewichte umfasst.

2. Netzknoten (300) nach Anspruch 1, wobei der Netzknoten (300) den Funknetzknoten (100) umfasst, der eines von Folgendem umfasst, nämlich eine Funkbasisstation (100) oder eine Standortmesseinheit (100) im drahtlosen Netz (10), wobei der Funknetzknoten (100) einen Empfänger (310) aufweist, der dafür konfiguriert ist, ein Signal zu empfangen, und wobei die Informationseinheit (310) **dadurch gekennzeichnet ist, dass** sie umfasst:

eine Störungsunterdrückungseinheit (312), die einen Störungsunterdrückungsempfänger umfasst und dafür konfiguriert ist, das empfangene Signal so zu verarbeiten, dass Störung im empfangenen Signal unterdrückt wird, um ein entstörtes Signal zu bestimmen; und

eine Messeinheit (314), die dafür konfiguriert ist, die Störungsunterdrückungsinformation auf der Grundlage des entstörten Signals zu bestimmen.

3. Netzknoten (300) nach Anspruch 2, wobei die Messeinheit (314) dafür konfiguriert ist, die nach Störungsunterdrückung verbleibende Last zu bestimmen, indem die nach Störungsunterdrückung verbleibende Nachbarzellenstörung auf der Grundlage des entstörten Signals bestimmt wird und ein nach Störungsunterdrückung verbleibender Rauschanstieg auf der Grundlage der nach Störungsunterdrückung verbleibenden Nachbarzellenstörung bestimmt wird, und wobei die Meldeeinheit (330) die Störungsunterdrückungsinformation meldet, indem sie die nach Störungsunterdrückung verbleibende Last als den nach Störungsunterdrückung verbleibenden Rauschanstieg meldet.

4. Netzknoten (300) nach Anspruch 2, wobei der Empfänger (110) ferner dafür konfiguriert ist, eine Störungskontrollanweisung zu empfangen, die auf der Grundlage der Störungsunterdrückungsinformation vom entfernten Netzknoten (100, 200) abgeleitet ist, und wobei der Netzknoten (300) ferner eine Koordinierungseinheit (325) umfasst, die dafür konfiguriert ist, die empfangene Störungskontrollanweisung auszuführen.

5. Netzknoten (300) nach Anspruch 1, wobei der Netzknoten (300) eine Funknetzsteuereinrichtung (200) umfasst und wobei die Informationseinheit (310) **dadurch gekennzeichnet ist, dass** sie umfasst:

eine Anforderungseinheit (316), die dafür konfiguriert ist, die Störungsunterdrückungsinformation von einem ersten Funknetzknoten (100) anzufordern, wobei der erste Funknetzknoten die angeforderte Störungsunterdrückungsinformation unter Verwendung des Störungsunterdrückungsempfängers bestimmt hat; und

einen Empfänger (318), der dafür konfiguriert ist, die angeforderte Störungsunterdrückungsinformation vom ersten Funknetzknoten (100) zu empfangen.

6. Netzknoten (300) nach Anspruch 5, ferner umfassend eine Koordinierungseinheit (320), die dafür konfiguriert ist, eine Störungskontrollanweisung auf der Grundlage der empfangenen Störungsunterdrückungsinformation zu erzeugen und die Störungskontrollanweisung an den ersten Funknetzknoten (100) zu melden.

7. Netzknoten (300) nach Anspruch 5, ferner umfassend eine Koordinierungseinheit (320), die dafür konfiguriert ist, eine Störungskontrollanweisung auf der Grundlage der empfangenen Störungsunterdrückungsinformation zu erzeugen, wobei die Meldeeinheit (330) ferner dafür konfiguriert ist, die Störungskontrollanweisung an den zweiten Funknetzknoten (100) zu melden

8. Netzknoten (300) nach Anspruch 5, wobei der entfernte Knoten (100, 200) eine zweite Funknetzsteuereinrichtung (200) umfasst und wobei die Meldeeinheit (330) dafür konfiguriert ist, die Störungsunterdrückungsinformation zu melden, indem sie zumindest eines an die zweite Funknetzsteuerungseinrichtung (200) meldet, nämlich einen nach Störungsunterdrückung verbleibenden Rise-over-Thermal und/oder einen nach Störungsunterdrückung verbleibenden Rauschanstieg.

9. Netzknoten (300) nach Anspruch 5, wobei der entfernte Netzknoten (100, 200) einen zweiten Funknetzknoten (100) umfasst.

10. Verfahren zur Meldung von Störungsunterdrückungsinformation, die Information über Störung nach Störungsunterdrückung zwischen Netzknoten (300) in einem drahtlosen Netz (10) umfasst, wobei das Verfahren umfasst:

Verarbeiten eines empfangenen Signals unter Verwendung eines Störungsunterdrückungsempfängers, um Störung im empfangenen Signal zu unterdrücken, um die Störungsunterdrückungsinformation zu bestimmen, wobei die Störungsunterdrückungsinformation ein nach Störungsunterdrückung verbleibendes Grundrauschen umfasst, das einer Zelle (12) eines Funknetzknoten (100) im drahtlosen Netz (10) zugeordnet ist;

Melden der Störungsunterdrückungsinformation an einen entfernten Netzknoten (100, 200) im drahtlosen Netz (10) über eine Schnittstelle (50), die einen Netzknoten (300) mit einem entfernten Netzknoten (100, 200) kommunikationsmäßig koppelt, und

Melden einer Fähigkeitsangabe, die mindestens eines von Folgendem angibt, nämlich eine Fähigkeit des Netzknotens (300), Störung anzugehen, eine Fähigkeit des Netzknotens (300), die Störungsunterdrückungsinformation zu melden und zu melden, ob Störungsunterdrückung auf die gemeldete Information angewendet worden ist,

wobei die Störungsunterdrückungsinformation aus einem Grundrauschschätzwert vor der G-RAKE+Verarbeitung, multipliziert mit einem Skalierungsfaktor, gewonnen wird, wobei der Skalierungsfaktor G-RAKE+Kombinationsgewichte umfasst.

11. Verfahren nach Anspruch 10, wobei der Netzknoten (300) einen Funknetzknoten (100) umfasst, der eines von Folgendem umfasst, nämlich eine Funkbasisstation oder eine Standortmesseinheit im drahtlosen Netz (10), wobei das Verfahren ferner umfasst: Empfangen eines Signals, wobei das Bestimmen der Störungsunterdrückungsinformation umfasst:

Verarbeiten des empfangenen Signals unter Verwendung des Störungsunterdrückungsempfängers, um Störung im empfangenen Signal zu unterdrücken, um ein entstörtes Signal zu bestimmen; und
Bestimmen der Störungsunterdrückungsinformation auf der Grundlage des entstörten Signals.

12. Verfahren nach Anspruch 11, ferner umfassend: Messen der Störung in mindestens einem von Folgendem, nämlich in vordefinierten Zeitbereichsfunkressourcen und/oder in vordefinierten Frequenzbereichsfunkressourcen.

13. Verfahren nach Anspruch 11, wobei das Bestimmen der nach Störungsunterdrückung verbleibenden Last umfasst: Bestimmen der nach Störungsunterdrückung verbleibenden Nachbarzellenstörung auf der Grundlage des entstörten Signals und Bestimmen eines nach Störungsunterdrückung verbleibenden Rauschanstiegs auf der Grundlage der nach Störungsunterdrückung verbleibenden Nachbarzellenstörung, und wobei das Melden der Störungsunterdrückungsinformation umfasst: Melden der nach Störungsunterdrückung verbleibenden Last als den nach Störungsunterdrückung verbleibenden Rauschanstieg.

14. Verfahren nach Anspruch 11, ferner umfassend: Anpassen der Abwärtsstreckensendeleistung des Funknetzknotens auf der Grundlage der Störungsunterdrückungsinformation.

15. Verfahren nach Anspruch 11, ferner umfassend: Empfangen einer Störungskontrollanweisung, die auf der Grundlage der Störungsunterdrückungsinformation vom entfernten Netzknoten (100, 200) abgeleitet ist, und Ausführen der empfangenen Kontrollanweisung.

16. Verfahren nach Anspruch 15, wobei die empfangene Störungskontrollanweisung mindestens eines von Folgendem umfasst, nämlich eine Leistungseinstellanweisung, eine Zugangskontrollanweisung, eine Überlastungskontrollanweisung, eine Ablaufplanungsanweisung, eine Handover-Anweisung und eine Lastausgleichsanweisung.

17. Verfahren nach Anspruch 10, wobei der Netzknoten (300) eine Funknetzsteuereinrichtung (200) umfasst und wobei das Bestimmen der Störungsunterdrückungsinformation umfasst:

Anfordern der Störungsunterdrückungsinformation von einem ersten Funknetzknoten (100), der die angeforderte Störungsunterdrückungsinformation unter Verwendung des Störunterdrückungsempfängers bestimmt hat; und
Empfangen der angeforderten Störungsunterdrückungsinformation vom ersten Funknetzknoten (100).

18. Verfahren nach Anspruch 17, ferner umfassend: Erzeugen einer Störungskontrollanweisung auf der Grundlage der empfangenen Störungsunterdrückungsinformation und Melden der Störungskontrollanweisung an mindestens eines von Folgendem, nämlich den ersten Funknetzknoten (100) und/oder einen zweiten Funknetzknoten (200).

19. Verfahren nach Anspruch 17, wobei der entfernte Knoten (100, 200) eine zweite Funknetzsteuereinrichtung (200) umfasst.

20. Verfahren nach Anspruch 17, wobei der entfernte Netzknoten (100, 200) einen zweiten Funknetzknoten (100) umfasst.

**Revendications**

1. Noeud de réseau (300) configuré de manière à signaler des informations déparasitées à un ou plusieurs noeuds distants (100, 200) dans un réseau sans fil (10), lesdites informations déparasitées comprenant des informations sur le brouillage après une suppression de brouillage, le noeud de réseau (300) comprenant :

une unité d'informations (310) configurée de manière à traiter un signal reçu en utilisant un récepteur de suppression de brouillage, en vue de supprimer un brouillage dans le signal reçu afin de déterminer les informations déparasitées, lesdites informations déparasitées comprenant un bruit de fond déparasité associé à une cellule (12) d'un noeud de réseau radio (100) dans le réseau sans fil (10) ; et

une unité de signalisation (330) configurée de manière à signaler les informations déparasitées à un noeud de réseau distant (100, 200) dans le réseau sans fil (10), par l'intermédiaire d'une interface (50) couplant en communication le noeud de réseau (300) au noeud de réseau distant (100, 200), l'unité de signalisation (330) étant en outre configurée de manière à signaler une indication de capacité indiquant au moins l'une parmi une capacité du noeud de réseau (300) à répondre au brouillage, une capacité du noeud de réseau (300) à signaler les informations déparasitées, et si une suppression de brouillage a été appliquée aux informations signalées ; dans lequel les informations déparasitées sont obtenues à partir d'une estimation de bruit de fond avant un traitement G-RAKE+, multipliée par un facteur d'échelle, où le facteur d'échelle comprend des pondérations de combinaison G-RAKE+.

2. Noeud de réseau (300) selon la revendication 1, dans lequel le noeud de réseau (300) comprend le noeud de réseau radio (100) comprenant l'une parmi une station de base radio (100) et une unité de mesure d'emplacement (100) dans le réseau sans fil (10), ledit noeud de réseau radio (100) incluant un récepteur (310) configuré de manière à recevoir un signal, et dans lequel l'unité d'informations (310) est **caractérisée en ce qu'**elle comprend :

une unité de suppression de brouillage (312) comprenant le récepteur de suppression de brouillage et configurée de manière à traiter le signal reçu en vue de supprimer le brouillage dans le signal reçu afin de déterminer un signal déparasité ; et
une unité de mesure (314) configurée de manière à déterminer les informations déparasitées sur la base du signal déparasité.

3. Noeud de réseau (300) selon la revendication 2, dans lequel l'unité de mesure (314) est configurée de manière à déterminer la charge déparasitée en déterminant le brouillage de cellules voisines déparasitées sur la base du signal déparasité, et en déterminant une élévation du bruit déparasitée sur la base du brouillage de cellules voisines déparasitées, et dans lequel l'unité de signalisation (330) signale les informations déparasitées en signalant la charge déparasitée en termes d'élévation du bruit déparasitée.

4. Noeud de réseau (300) selon la revendication 2, dans lequel le récepteur (110) est en outre configuré de manière à recevoir une instruction de gestion de brouillage dérivée sur la base des informations déparasitées en provenance du noeud de réseau distant (100, 200), et dans lequel le noeud de réseau (300) comprend en outre une unité de coordination (325) configurée de manière à exécuter l'instruction de gestion de brouillage reçue.

5. Noeud de réseau (300) selon la revendication 1, dans lequel le noeud de réseau (300) comprend un contrôleur de réseau radio (200), et dans lequel l'unité d'informations (310) est **caractérisée en ce qu'**elle comprend :

une unité demanderesse (316) configurée de manière à demander les informations déparasitées à partir d'un premier noeud de réseau radio (100), dans lequel ledit premier noeud de réseau radio a déterminé les informations déparasitées demandées en utilisant le récepteur de suppression de brouillage ; et
un récepteur (318) configuré de manière à recevoir les informations déparasitées demandées à partir du premier noeud de réseau radio (100).

6. Noeud de réseau (300) selon la revendication 5, comprenant en outre une unité de coordination (320) configurée de manière à générer une instruction de gestion de brouillage sur la base des informations déparasitées reçues, et à signaler l'instruction de gestion de brouillage au premier noeud de réseau radio (100).

7. Noeud de réseau (300) selon la revendication 5, comprenant en outre une unité de coordination (320) configurée de manière à générer une instruction de gestion de brouillage sur la base des informations déparasitées reçues, dans lequel l'unité de signalisation (330) est en outre configurée de manière à signaler l'instruction de gestion de brouillage à un second noeud de réseau radio (100).

8. Noeud de réseau (300) selon la revendication 5, dans lequel le noeud de réseau distant (100, 200) comprend un second contrôleur de réseau radio (200), et dans lequel l'unité de signalisation (330) est configurée de manière à signaler les informations déparasitées en signalant au moins l'une parmi une élévation du bruit au-dessus du bruit thermique déparasitée et une élévation du bruit déparasitée au second contrôleur de réseau radio (200).

**9.** Noeud de réseau (300) selon la revendication 5, dans lequel le noeud de réseau distant (100, 200) comprend un second noeud de réseau radio (100).

**10.** Procédé de signalisation d'informations déparasitées comportant des informations concernant un brouillage après une suppression de brouillage entre des noeuds de réseau (300) dans un réseau sans fil (10), le procédé comprenant les étapes ci-dessous consistant à :

traiter un signal reçu en utilisant un récepteur de suppression de brouillage, en vue de supprimer un brouillage dans le signal reçu afin de déterminer les informations déparasitées, lesdites informations déparasitées comprenant un bruit de fond déparasité associé à une cellule (12) d'un noeud de réseau radio (100) dans le réseau sans fil (10) ; et

signaler les informations déparasitées à un noeud de réseau distant (100, 200) dans le réseau sans fil (10), par l'intermédiaire d'une interface (50) couplant en communication un noeud de réseau (300) au noeud de réseau distant (100, 200) ; et

signaler une indication de capacité indiquant au moins l'une parmi une capacité du noeud de réseau (300) à répondre au brouillage, une capacité du noeud de réseau (300) à signaler les informations déparasitées, et si une suppression de brouillage a été appliquée aux informations signalées ;

dans lequel les informations déparasitées sont obtenues à partir d'une estimation de bruit de fond avant un traitement G-RAKE+, multipliée par un facteur d'échelle, où le facteur d'échelle comprend des pondérations de combinaison G-RAKE+.

**11.** Procédé selon la revendication 10, dans lequel le noeud de réseau (300) comprend un noeud de réseau radio (100) comprenant l'une parmi une station de base radio et une unité de mesure d'emplacement dans le réseau sans fil (10), le procédé comprenant en outre la réception d'un signal, dans lequel la détermination des informations déparasitées comporte les étapes ci-dessous consistant à :

traiter le signal reçu en utilisant le récepteur de suppression de brouillage, en vue de supprimer le brouillage dans le signal reçu afin de déterminer un signal déparasité ; et

déterminer les informations déparasitées sur la base du signal déparasité.

**12.** Procédé selon la revendication 11, comprenant en outre la mesure du brouillage sur au moins l'une parmi des ressources radio de domaine temporel prédéfinies et des ressources radio de domaine fréquentiel prédéfinies.

**13.** Procédé selon la revendication 11, dans lequel la détermination de la charge déparasitée comporte la détermination du brouillage de cellules voisines déparasitées sur la base du signal déparasité, et la détermination d'une élévation du bruit déparasitée sur la base du brouillage de cellules voisines déparasitées, et dans lequel la signalisation des informations déparasitées comprend la signalisation de la charge déparasitée en termes d'élévation du bruit déparasitée.

**14.** Procédé selon la revendication 11, comprenant en outre l'ajustement de la puissance de transmission en liaison descendante du noeud de réseau radio sur la base des informations déparasitées.

**15.** Procédé selon la revendication 11, comprenant en outre la réception d'une instruction de gestion de brouillage dérivée sur la base des informations déparasitées à partir du noeud de réseau distant (100, 200), et l'exécution de l'instruction de gestion reçue.

**16.** Procédé selon la revendication 15, dans lequel l'instruction de gestion de brouillage reçue comprend au moins l'une parmi une instruction de réglage de puissance, une instruction de commande d'admission, une instruction de commande d'encombrement, une instruction de planification, une instruction de transfert intercellulaire, et une instruction d'équilibrage de charge.

**17.** Procédé selon la revendication 10, dans lequel le noeud de réseau (300) comprend un contrôleur de réseau radio (200), et dans lequel la détermination des informations déparasitées comprend les étapes ci-dessous consistant à :

demander les informations déparasitées à partir d'un premier noeud de réseau radio (100) qui a déterminé les informations déparasitées demandées en utilisant le récepteur de suppression de brouillage ; et

recevoir les informations déparasitées demandées à partir du premier noeud de réseau radio (100).

**18.** Procédé selon la revendication 17, comprenant en outre la génération d'une instruction de gestion de brouillage sur la base des informations déparasitées reçues, et la signalisation de l'instruction de gestion de brouillage à au moins l'un parmi le premier noeud de réseau radio (100) et un second noeud de réseau radio (200).

**19.** Procédé selon la revendication 17, dans lequel le noeud de réseau distant (100, 200) comprend un second contrôleur de réseau radio (200).

**20.** Procédé selon la revendication 17, dans lequel le noeud de réseau distant (100, 200) comprend un second noeud de réseau radio (100).

*FIG. 1*

FIG. 2

400

```
┌─────────────────────┐
│     DETERMINE IS     │
│     INFORMATION      │
│         410          │
└─────────────────────┘
           │
           ▼
┌─────────────────────┐
│      SIGNAL IS       │
│     INFORMATION      │
│         420          │
└─────────────────────┘
```

*FIG. 3*

FIG. 4

EP 2 649 838 B1

EP 2 649 838 B1

*FIG. 5*

FIG. 6

EP 2 649 838 B1

*FIG. 7*

FIG. 8

FIG. 9

SIGNALLING INTERFACE (INCLUDING SMS)
SIGNALLING AND DATA TRANSFER INTERFACE

*FIG. 10*

EP 2 649 838 B1

*FIG. 11*

v(t) → [ FFT ] → V(m) → [ FREQUENCY DOMAIN MULTIPLICATION ] → $Z_{FDE}(m)$ → [ I FFT ] → $Z_{FDE}(t)$ →

W(m) ↑

[ FFT ]

w(l) ↑

PILOT → [ CHANNEL ESTIMATION ] → h(l) → [ FDE FILTER COMPUTATION ]

*FIG. 12*

*FIG. 13*

EP 2 649 838 B1

FIG. 14

*FIG. 15*

EP 2 649 838 B1

*FIG. 16*

FIG. 17

**EP 2 649 838 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008097145 A1
- WO 2012074475 A1
- US 442901 A
- WO 2008039123 A

### Non-patent literature cited in the description

- **T. WIGREN ; P. HELLQVIST.** Estimation of Uplink WCDMA load in a Single RBS. *Proc. IEEE VTC-2007 Fall, Baltimore, MD,* 01 October 2007
- **T. WIGREN.** Soft Uplink Load Estimation in WCDMA. *IEEE Trans. Veh. Tech.,* March 2009
- **T. WIGREN.** Recursive Noise Floor Estimation in WCDMA. *IEEE Trans. Veh. Tech.,* 2010, vol. 59 (5), 2615-2620
- **E. DAHLMAN ; S. PARKVALL, JSKÖLD ; P. BEMING.** 3G Evolution - HSPA and LTE for Mobile Broadband - Section 5.1. Academic Press, 2008